# EUROPÄISCHE PATENTSCHRIFT

(11) **EP 2 063 972 B1**
(45) Veröffentlichungstag und Bekanntmachung des Hinweises auf die Patenterteilung: **27.04.2016**
(21) Anmeldenummer: 07818017.1
(22) Anmeldetag: 10.08.2007
(51) Int. Cl.: A47J 31/60, C02F 1/00, C02F 1/28

(54) **TANK**
TANK
RÉSERVOIR

(30) Priorität: 10.08.2006 DE 102006037636
(43) Veröffentlichungstag der Anmeldung: 03.06.2009
(73) Patentinhaber: Aquis Wasser-Luft-Systeme GmbH Lindau, Zweigniederlassung Rebstein, 9445 Rebstein (CH)
(72) Erfinder: WALLERSTORFER, Kurt, A-5204 Strasswalchen (AT); WAWRLA, Andreas, CH-9443 Widnau (CH); SCHOLZ, Roland, 9436 Balgach (CH)
(74) Vertreter: Otten, Roth, Dobler & Partner mbB Patentanwälte
(86) Internationale Anmeldenummer: PCT/EP2007/007087
(87) Internationale Veröffentlichungsnummer: WO 2008/017492

(56) Entgegenhaltungen:
- CA-A1- 2 230 436
- DE-A1-102004 026 188
- DE-A1-102004 049 877
- DE-U1- 20 380 258
- GB-A- 2 346 568
- JP-A- 2001 149 715
- US-A1- 2003 038 046
- US-A1- 2004 211 931

## Beschreibung

Die Erfindung betrifft einen Wassertank mit Filterpatrone, ein Gerät und eine Filterpatrone nach den Oberbegriffen der Ansprüche 1, 9 und 10.

In verschiedenen Maschinen, beispielsweise in Kaffee- oder Espressomaschinen wird ein Wassertank zur Bevorratung einer Flüssigkeit, im Falle von Kaffee- oder Espressomaschinen zur Bevorratung von Wasser, vorgesehen, wobei eine Filterpatrone in den Tank einsetzbar ist, um das Wasser vor der Verarbeitung in der Maschine aufzubereiten. Bekannte Filterpatronen weisen im unteren Bereich einen Einlass auf, durch den das Wasser seitens der zugehörigen Maschine angesaugt wird. Hierbei wird das Wasser über ein Filterbett geleitet und gelangt über einen Anschluss der Filterpatrone an einen entsprechenden Sauganschluss des Wassertanks in die Maschine.

Für einen zuverlässigen Betrieb der Maschine ist es von großer Bedeutung, dass eine in ihren Filterparametern definierte Filterpatrone verwendet wird. Durch eine mangelhafte Filterpatrone wird der Maschine unzureichend oder falsch aufbereitetes Wasser zugeführt, was zu negativen Auswirkungen, beispielsweise Verkalkung oder dergleichen, bis hin zu Maschinendefekten führen kann. Die Maschinensteuerung ist nicht in der Lage, rechtzeitig die vorgesehenen Wartungsintervalle einzuleiten, wenn sie von einer Filterpatrone des korrekten Typs ausgeht, diese jedoch tatsächlich nicht verwendet wird. Bei der Verwendung ungenügender Filterpatronen kommt es zu Problemen nicht nur in der Betriebssicherheit der Maschine, sondern auch in Fragen der Gewährleistung usw. Es ist daher von großer Bedeutung, sicherzustellen, dass stets nur zugelassene Filterpatronen zum Einsatz kommen.

Aus dem Stand der Technik zeigt die DE 10 2004 026 188 A1 einen Tank für wasserführende Geräte mit einem Anschluss am Tank zur Zufuhr von Wasser aus dem Wassertank in ein Sammelgefäß, sowie einen Filteranschluss zum Anschluss einer gravimetrisch betriebenen Filterkartusche im Inneren des Tanks.

Die DE 10 2004 049 877 A1 offenbart eine zum Einsetzen in einen Wasserbehälter vorgesehene Saugfilterkartusche, an deren Auslaufstutzen ein an einem Filmscharnier angelenkter Schnapprand ausgebildet ist. Dieser wird beim Aufsetzen der Filterpatrone auf einem, den im Inneren des Wasserbehälters angeordneten Auslass umrandenden Sitzelement von einem daran als Ringschulter ausgebildeten Betätigungselement erfasst und von einer ersten nach unten gerichteten Schnappposition in eine zweiten nach oben gerichtete Schnappposition umgeklappt, sodass er dichtend und klemmend an einem ebenfalls daran ausgebildeten Rohrstutzen fixiert wird. Hierdurch soll ein Aufschwimmen der Filterpatrone beim Befüllen des Wasserbehälters mit Wasser ohne zusätzliche Sicherungselemente auf einfache Weise und zuverlässig dichtend zur Verfügung gestellt werden. Die GB 2 346 568 A offenbart einen Wasserbehälter mit einer Bodenöffnung, in welche eine an der Unterseite des Wasserbehälters anzuordnende Filterkartusche mit einem als Verdrehsicherung ausgebildeten, rotationsunsymetrischen filterseitigen Tankanschlusselement eingesteckt wird. Die DE 203 80 258 U1 offenbart ebenfalls einen Wasserbehälter, an welchem vom dessen Unterseite her eine Wasserbehandlungskartusche mittels an deren Gehäuserand flügelartig nach außen stehend ausgebildeten, in der Form eines Schlüsselkonzeptes ausgebildeten Fixierelementen angeordnet ist.

Dem vorliegenden Patentbegehren liegt die objektive Aufgabe zugrunde, Mittel zur zuverlässigen Wasseraufbereitung gemäß für einen bestimmten Anwendungsfall definierter Filterparameter vorzuschlagen.

Die Lösung dieser Aufgabe erfolgt, ausgehend von den Oberbegriffen der Ansprüche 1, 9 und 10 durch deren kennzeichnende Merkmale. In den abhängigen Ansprüchen sind vorteilhafte und zweckmäßige Weiterbildungen angegeben.

Dementsprechend zeichnet sich ein erfindungsgemäßer Tank mit Sauganschlusselement zum Ansaugen von Wasser mittels Unterdruck aus dem Tank und einem Filteranschluss zum Anschluss einer Filterpatrone im Inneren des Tanks dadurch aus, dass mechanische Kodierungsstrukturen am Filteranschlusselement vorgesehen sind, um den Einsatz einer nicht zum Tank korrespondierenden Filterkartusche auszuschließen. Unter einem solchen tankseitigem Filteranschlusselement sind erfindungsgemäß direkt und/oder indirekt am Tank angeordnete und/oder ausgebildete Elemente zu verstehen, wie vorstehende und/oder vertiefte Aufnahme- und/oder Fixier- und/oder Kodier- und/oder Dichtelemente. Diese können z.B. als fest mit dem Tank verbundene oder verbindbar ausgebildete Ausschlussstutzen, als Haken, Ösen, Adapter oder dergleichen ausgebildet sein.

Der tankseitige Filteranschluss ist hierbei vorzugsweise im Bodenbereich des Tanks ausgebildet. Er kann durchaus aber auch wenigstens teilweise oder auch vollständig in einer Ecke und/oder an einer Seitenwand des Tanks innen angeordnet sein, je nach dem an welcher Stelle der Anschluss zwischen dem Wassertank und einer geräteseitigen Abflussleitung vorgesehen ist. Zum Beispiel ist auch ein in einem vom Boden des Tanks in dessen betriebsmäßiger Einbaulage nach oben hin beabstandet aus dem Tank herausgeführtes tankseitiges Filteranschlusselement denkbar.

Durch solche Ausführungsformen kann z.B. ein kannen- und/oder schubladenartiger Tank realisiert werden, in welchem wiederum nur eine mit einem entsprechenden kodierten filterseitigen Tankanschlusselement versehene Filterpatrone eingesetzt werden kann. Die geräteseitige Verbindung des Tankanschlusses kann sowohl bei diesem als auch bei den vorbeschriebenen Ausführungsformen als Steckanschluss an ein entsprechend komplementäres geräteseitige Tankanschlusselement angeschlossen werden. Das vom Tankboden beabstandete tankseitige Filteranschlusselement kann beispielsweise auch als an einer Tankwand einhängbares Filteranschlusselement ausgebildet sein, z.B. in der Form einer Rohrleitung, die bei eingesetzter Patrone mit entsprechend passender Kodierung zur Ausleitung des in den Tank eingefüllten und durch die Filterpatrone gefilterten Rohwassers dient.

Bei entsprechend tiefliegender Anordnung der Wassereintrittsöffnungen für die Filterstrecke kann auch mit einer derartigen Ausführungsform der wesentliche Inhalt des Tanks entleert werden, so dass dieser keine oder nur eine geringe Menge an nicht durch die Filterstrecke führbares Todwasser aufweist.

Die Strukturen am Filteranschluss des Tanks müssen somit nach einem Schlüssel-Schlossprinzip mit entsprechenden Anschlussstrukturen einer Filterpatrone wechselwirken, damit die Filterpatrone funktionsfähig in den Wassertank einsetzbar ist. Ein Maschinen- bzw. Tankhersteller kann auf diese Weise dafür Sorge tragen, dass nur Filterpatronen zum Einsatz kommen, die einen zuverlässigen Betrieb der Maschine gewährleisten. Der Unterdruck zum Absaugen kann beispielsweise über eine Saugpumpe erzeugt werden.

In einer besonders vorteilhaften Ausführungsform der Erfindung wird der Filteranschluss des Tanks und ein Anschlussstutzen der Filterpatrone so ausgebildet, dass diese einander umschließen.

Vorzugsweise werden die Kodierungsstrukturen wenigstens teilweise zugleich als Fixierungselemente zur Befestigung der Filterpatrone ausgebildet. In diesem Fall werden den Kodierungsstrukturen bevorzugt hinterschneidend ausgeführt, so dass beispielsweise durch Drehen oder durch Klipsen eine Fixierung der Filterpatrone am Tankboden bzw. einem am Tankboden angebrachten Befestigungselement stattfinden kann, wobei selbstverständlich die entsprechenden Kodierungsstrukturen zueinander passen müssen, um einen Betrieb mit korrekter Filterpatrone sicherzustellen. Kodierungsstrukturen können grundsätzlich auch als Betätigungsorgane im Bereich des Tankanschlusses herangezogen werden. So kann beispielsweise ein am Tank angebrachter Schaltmechanismus mit den Kodierungsstrukturen der Filterpatrone betätigt werden, der zur Signalisierung des korrekten Sitzes der Filterpatrone oder zur Erkennung des richtigen Typs von Patrone oder der eingestellten Verschnittmenge durch das zugehörige Gerät dienen kann. Eine solche Ausgestaltung der Kodierungselemente als Betätigungsorgan ist unter anderem in Verbindung mit allen anderen Arten von Kodierungsstrukturen möglich.

In der Erfindung wird die Kodierungsstruktur durch die Formgebung des Umfangs des tankseitigen Filteranschlusses realisiert. So kann eine Kodierung beispielsweise durch eine Abweichung von den bisherigen, vorzugsweise über eine bestimmte Längserstreckung mit gleich großem, kreisrunden Querschnittsformen entsprechender Anschlusselemente vorgenommen werden. So kann beispielsweise durch eine über eine bestimmte Längserstreckung konischen Form des tankseitigen Filteranschlusses sichergestellt werden, dass nur eine entsprechend dazu passende Filterpatrone verwendbar ist. Darüber hinaus können in Kombination mit dieser Ausführungsform durchaus noch weitere Kodierungsstrukturen, z. B. in axialer Richtung wirkende Vorsprünge und/oder Ausnehmungen vorgesehen werden.

In dieser Ausführungsform wird der Filteranschluss des Tanks mit einer Umfangskontur in Form eines Polygonzugs vorgesehen. Eine derartige Formgebung ermöglicht darüber hinaus eine weitergehende Winkelkodierung für verschiedene Einsatzwinkelpositionen der Filterpatrone.

Vorzugsweise wird zu diesem Zweck eine drehsymmetrische Umfangskontur am Filteranschlusselement vorgesehen. Mit Hilfe einer drehsymmetrischen Ausgestaltung sind verschiedene, vorbestimmte Winkelpositionen beim Einsetzen einer Filterpatrone realisierbar, denen bei Bedarf eine Zusatzfunktion je nach Winkelposition zugeordnet werden kann. Die Umfangsform des tankseitigen Filteranschlusselementes nach den oben beschriebenen Ausführungsbeispielen ist mit einer Sechskant-Querschnittskontur gegeben. Eine solche Kontur lässt z. B. sechs verschiedene Winkelpositionen einer dazu korrespondierenden Filterpatrone zu.

Das tankseitige Filteranschlusselement ist dabei als Vorsprung mit entsprechendem Außenumfang ausgebildet. Ein Anschlussstutzen ist dementsprechend zum Aufstecken eines korrespondierenden Anschlusselementes der Filterpatrone am Außenumfang mit der entsprechenden Umfangskontur versehen.

Vorteilhafterweise wird die so geformte Umfangsfläche zugleich als Dichtfläche ausgebildet. Die Dichtung kann somit in vorteilhafter Weise aus dem gleichen Material wie das Patronengehäuse hergestellt werden, vorzugsweise angespritzt. Auf diese Weise ist sichergestellt, dass nur eine Filterpatrone mit dazu korrespondierender Form der Dichtung für die Filterausgangsleitung funktionsfähig in den Tank eingesetzt und am tankseitigen Filteranschlusselement angeschlossen werden kann.

Eine Umfangsfläche, die wie oben beschrieben geformt ist, kann auch als Halterung für die Filterpatrone verwendet werden, die mit einem entsprechend geformten Halterungselement im Tankbereich korrespondiert. Auch in diesem Fall ist durch die Umfangsfläche eine Kodierungsstruktur realisiert.

Eine weitere Kodiermöglichkeit des Tank-Filteranschlusses besteht durch die Veränderung der Ausrichtung der durch das filterseitige Tankanschlusselement verlaufenden Längsachse gegenüber einer durch das Filtergehäuse verlaufenden Längsachse, so dass diese zueinander beispielsweise einen bestimmten, insbesondere spitzen Winkel ausbilden. Hierzu kann das filterseitige Tankanschlusselement gegenüber dem Patronengehäuse vorzugsweise leicht geknickt ausgebildet sein. Patronen, die kein in ihrer Lage derart abgeknickt ausgerichtetes Anschlusselement aufweisen, können in einem entsprechend eng ausgebildeten Wassertank nicht funktionstüchtig eingesetzt werden. Ein weiterer Vorteil einer solchen Kodierung liegt darin, dass damit auch gewölbte und/oder gebogen ausgebildete Wassertanks mit vergleichsweise großer Längserstreckung betriebssicher und zuverlässig bestückbar sind, da durch die Abwinkelung der beiden Längsachsen zueinander eine entsprechend zuverlässig dichtende und fixierende Tank-Filter-Aufnahme durch eine optimale Ausrichtung des tankseitigen Filteranschlusselementes im Tank und eine von einer senkrechten Einführbewegung abweichende Einsetzbewegung für die Winkelpatrone realisierbar ist.

Gegebenfalls können hierzu an der Filterpatrone und/oder am Tank weitere Führungselemente zur zuverlässigen Verbindung des tankseitigen Filteranschlusselementes mit dem filterseitigen Tankanschlusselement vorgesehen sein. Insbesondere gut eignet sich hierfür z.B. tankseitig vorgesehene in der Einführrichtung einen sich verjüngenden Querschnitt ausbildende Rippen, durch welche das filterseitige Anschlusselement und/oder das Filtergehäuse und/oder eine vom Filtergehäuse vorstehende Führungsstruktur, wie z.B. ein Anschlussring oder dergleichen, beim Einsetzen der Filterpatrone führen. Eine solche filterseitige Führungsstruktur kann als Umfangsfläche ausgebildet sein, sie kann auch schlitzförmig, komplementär zu den oben beschriebenen Rippen ausgebildete Konturen und/oder eine andere geeignete Struktur aufweisen.

Bei einer Rippen-Schlitz-Kodierung ist wiederum eine weitere Kodiermöglichkeit durch in Draufsicht betrachtet unterschiedliche Winkelkodierung für einzelne oder mehrere solche komplementärer Elemente möglich. Nur wenn die Schlitz-Rippenkombination und die abgewinkelte Tank-Filteranschlussstruktur zusammenpassen kann eine entsprechende Filterpatrone betriebsgemäß eingesetzt werden.

Diese hier beschriebene Führungs- und Kodierstruktur ist aber durchaus auch für nicht abgewinkelt ausgebildete Filteranschlusselemente mit der gleichen Wirkungsweise einsetzbar.

Eine zusätzliche Führungs- und/oder Kodierfunktion kann durch an der Filterpatrone stirnseitig ausgebildete, vorstehende Spitzen oder Ausnehmungen realisiert werden, welche in entsprechend komplementär ausgeformte, tankseitige Kodier- und/oder Führungsstrukturen eingreifen können.

Die Kodierungsstruktur kann, insbesondere dann, wenn sie zugleich die Dichtfläche bildet, eine in axialer Richtung sich erstreckende Querschnittsverjüngung, z.B. nach Art eines Pyramidenstumpfs aufweisen. Hierdurch wird ein leichteres, dichtes Aufstecken ohne größere Reibungskräfte ermöglicht.

Auf Seiten der Filterpatrone sind, wie bereits mehrfach angesprochen, die entsprechenden Kodierungsstrukturen vorzusehen, die mit den tankseitigen Kodierungsstrukturen korrespondieren. Die Dichtfläche des tankseitigen Filteranschlusses ist in die Formgebung der Kodierungsstrukturen eingeschlossen, sodass die Dichtung selbst als filterseitiges Tankanschlusselement mit der entsprechenden Formgebung versehen ist. So ist durch den sechskantförmigen Querschnitt des tankseitigen Filteranschlusselementes die Möglichkeit gegeben, als Gegenstück eine entsprechend sechskantförmige Dichtung vorzusehen. Diese kann dabei als Axialdichtung bevorzugt als Radialdichtung ausgeführt werden, die auf einen entsprechend geformten, im obigen Ausführungsbeispiel sechskantförmigen Vorsprung aufgesteckt wird.

Im Falle einer Querschnittsverjüngung wie oben angeführt wird dabei vorzugsweise auch die Dichtung entsprechend angepasst, so dass sie sich beim Aufstecken auf einen z.B. als Sechskant-Pyramidenstumpf ausgebildeten Vorsprung flächig anschmiegt.

In dieser Ausgestaltung ist nur eine Filterpatrone mit entsprechend geformter Dichtung funktionsfähig einsetzbar.

In einer Weiterbildung der Erfindung werden zwei oder mehrere unterschiedliche Kodierungsstrukturen vorgesehen. So kann beispielsweise in Kombination mit einer Kodierung des Anschlusses wie vorbeschrieben zusätzlich ein Fixierungsmittel vorgesehen werden, mit dem die Filterpatrone positionierbar ist, wobei in diesem Fixierungsmittel weitere Kodierungsstrukturen untergebracht werden können. So kann beispielsweise eine Kodierung über die Dichtfläche wie vorbeschrieben kombiniert werden mit einer separat davon angeordneten Vorrichtung zur Fixierung und/oder zusätzlichen Kodierung. Eine solche Fixierung kann innerhalb der Filterpatrone oder aber auch außerhalb der Filterpatrone vorgenommen werden.

In einer besonderen Ausführungsform werden vom Boden des Tanks abstehende, am Außenumfang der Filterpatrone angreifende Fixierungsmittel vorgesehen, die zusätzlich eine Kodiereigenschaft haben können. So kann beispielsweise über derartige Element wiederum eine entsprechende Fixierung realisiert werden. Ein Beispiel für eine Fixierung ist beispielsweise das Verrasten oder Einklipsen der Filterpatrone in entsprechenden Rast- oder Klipselementen, die gegebenenfalls ebenfalls als Kodierstruktur ausgebildet sein können.

Vorteilhafterweise wird darüber hinaus eine Verschnitteinstellung vorgesehen, mit der ein Bypassstrom von ungefiltertem oder auf andere Weise gefiltertem oder auf andere Weise aufbereitetem Wasser am Filterbett vorbeigeführt wird, wobei die Menge des ungefilterten oder auf andere Weise gefilterten oder aufbereiteten Wassers einstellbar ausgebildet wird. Dies ist beispielsweise mit einer oder mehreren Bypassöffnungen möglich, die zur Einstellung der am Filterbett vorbeigeleiteten Wassermenge variabel einstellbar geöffnet werden. Eine solche Verschnitteinstellung kann beispielsweise über die Winkelposition der Einbaulage der Filterpatrone verwirklicht werden. In diesem Fall ist die Kombination der Kodierungsstruktur mit der Vorgabe fester Winkelpositionen über die Einbaulage besonders von Vorteil. Eine solche Vorgabe kann beispielsweise mit einem drehsymmetrischen Umfang der entsprechenden Kodierungsstrukturen realisiert werden.

Die Verschnittmenge an ungefiltertem oder auf andere Weise aufbereitetem Wasser kann dabei durch entsprechend ausgebildete Öffnungen, die das Tankinnere direkt mit dem Abfluss des Tanks verbinden, verwirklicht werden. Diese Öffnungen können je nach Einsetzwinkel der Filterpatrone unterschiedlich groß ausgebildet bzw. geöffnet sein und/oder in unterschiedlicher Anzahl geöffnet werden, so dass sich abhängig von der Einbaulage der Filterpatrone ein unterschiedliches Verschnittverhältnis ergibt.

So können beispielsweise bei der sechskantförmigen Kodierungsstruktur im Anschlussbereich der Filterpatrone im tankseitigen Anschlussstutzen, der zur Verbindung mit der Filterpatrone vorgesehen ist, unterschiedlich große Öffnungen als Bypass vorgesehen werden, die beim Aufstecken einer Filterpatrone winkelabhängig verschlossen werden. Die Bypassöffnungen werden dabei bevorzugt in der Dichtfläche angebracht, so dass durch eine entsprechend geformte Anschlussdichtung der Filterpatrone beim Einsetzen der Filterpatrone alle Öffnungen mit Ausnahme der als Bypassöffnung vorgesehenen Öffnung abgedichtet werden.

Die Verschnittmenge kann auch auf andere Weise unter Nutzung der Kodierungsstruktur eingestellt werden. So kann beispielsweise eine Kodierungsstruktur zugleich als mechanischer Mitnehmer dienen, um ein Verstellelement im Tankbereich durch die Filterpatrone mechanisch zu betätigen. Im Falle des sechskantförmigen Anschlusssockels im Tankbereich könnte beispielsweise eine entsprechende Sechskantkontur der Filterpatrone dazu dienen, um ein verdrehbares Sockelelement zur Verschnittmengeneinstellung zu verdrehen. Die sechskantförmige Kodierungsstruktur der Filterpatrone hätte sodann nicht nur Kodierungsfunktion, sondern wäre zugleich ein mechanisches Betätigungselement, gewissermaßen nach Art eines Sechskantschlüssels.

Zur Realisierung einer Verschnittvorrichtung können aber auch entsprechende Öffnungen und/oder Kanäle in der Filterpatrone ausgebildet sein, die z.B. mit und/oder ohne Wechselwirkung mit einem tankseitigen Verschnittelement einen Verschnitt für das durch die Filterpatrone gefilterten Wassers ermöglichen. In entsprechender Weise gilt dies auch bei der Verwendung eines gegebenenfalls zwischen tank- und filterseitigem Anschlusselement zwischengefügtem Anschluss und/oder Verlängerungselement, wie z.B. einem Adapter mit gleicher und/oder anderer Anschluss- und/oder Kodier- und/oder Fixier- und/oder Dichtstruktur.

Um sicherzustellen, dass zur Umgehung der erfindungsgemäßen Kodierung der Tank einer Maschine gegen einen nicht zugelassenen Tank ohne Kodierungsstrukturen für den Einsatz nicht zugelassener Filterpatronen ausgetauscht werden, empfiehlt es sich, die Schnittstelle zwischen Tank und Maschine ebenfalls mit Kodierungsstrukturen zu versehen, die einem der oben beschriebenen Ausführungsbeispiele gleichen können. Hierbei sind die maschinenseitigen sowie die tankseitigen Anschlusselemente entsprechend zu kodieren.

Die Erfindung ist bei allen wasserführenden Geräten, insbesondere bei wasserführenden Haushaltsgeräten oder Geräten zur Aufbereitung von Speisen und/oder Getränken vorteilhaft einsetzbar, wie Getränkeautomaten, insbesondere Kaffeeautomaten, Trinkwasserspender, Koch- und Backgeräte, Dampf- und/oder Hochdruckreiniger, Luftreiniger und - konditionierer oder dergleichen, die einen entsprechenden Wassertank aufweisen.

Verschiedene Ausführungsbeispiele sind in der Zeichnung dargestellt und werden an Hand der Figuren nachstehend näher erläutert.

Im Einzelnen zeigen
- Fig. 1: eine Seitenansicht des Filteranschlussbereichs in einer ersten Ausführungsform,
- Fig. 2: eine Schnittdarstellung des Anschlussbereichs gemäß Figur 1,
- Fig. 3: eine Seitenansicht einer zweiten Ausführungsvariante eines Filteranschlusses,
- Fig. 4: eine Schnittdarstellung der zweiten Ausführungsform gemäß Fig. 3,
- Fig. 5: eine vergrößerte Seitenansicht gemäß Fig. 3,
- Fig. 6: eine Ausschnittvergrößerung aus den Seitenansichten gemäß Fig. 3 und Fig. 5,
- Fig. 7: eine Draufsicht auf ein tankseitiges Filteranschlusselement,
- Fig. 8: eine Schnittdarstellung auf ein Anschlusselement gemäß Fig. 7,
- Fig. 9: eine Draufsicht auf eine weitere Ausführungsform eines tankseitigen Filteranschlusselementes,
- Fig. 10: eine Schnittdarstellung durch ein Filteranschlusselement gemäß Fig. 9,
- Fig. 11: eine Draufsicht auf einen Bodenausschnitt eines Wassertank gemäß einer weiteren Ausführungsform,
- Fig. 12: eine Seitenansicht auf einen Bodenausschnitt eines Wassertankes gemäß Figur 11 mit eingesetzter Filterpatrone,
- Fig. 13: eine Draufsicht auf das Tankanschlusselement einer Filterpatrone gemäß Figur 12,
- Fig. 14: eine perspektivische Darstellung einer Filterpatrone gemäß Figur 12,
- Fig. 15: eine Draufsicht auf ein Bodenausschnitt eines Wassertankes gemäß einer weiteren Ausführungsform,
- Fig. 16: eine Schnittdarstellung in den Anschlussbereich der Filterpatrone einer Ausführungsform gemäß Fig. 11,
- Fig. 17: eine Ausführungsvariante mit winkelabhängiger Verschnittmengeneinstellung,
- Fig. 18: eine zweite Ausführungsvariante mit winkelabhängiger Verschnittmengeneinstellung,
- Fig. 19: beispielhaft und schematisch einen filterseitigen und einen geräteseitigen Tankanschluss, jeweils in Kombination mit einem entsprechend ausgebildeten Adapterstück,
- Fig. 20-31: eine weitere Ausführungsform eines Filteranschlusses für eine an einen Tank anzuschließende Filterpatrone mit einem tankseitigen Filteranschlusselement und einem filterseitigem Tankanschlusselement schematisch und beispielhaft in unterschiedlichen Ansichten und Ausschnitten dargestellt und die
- Fig. 32-90: weitere mögliche Ausführungsformen in unterschiedlichen Ansichten beispielhaft und schematisch dargestellt.

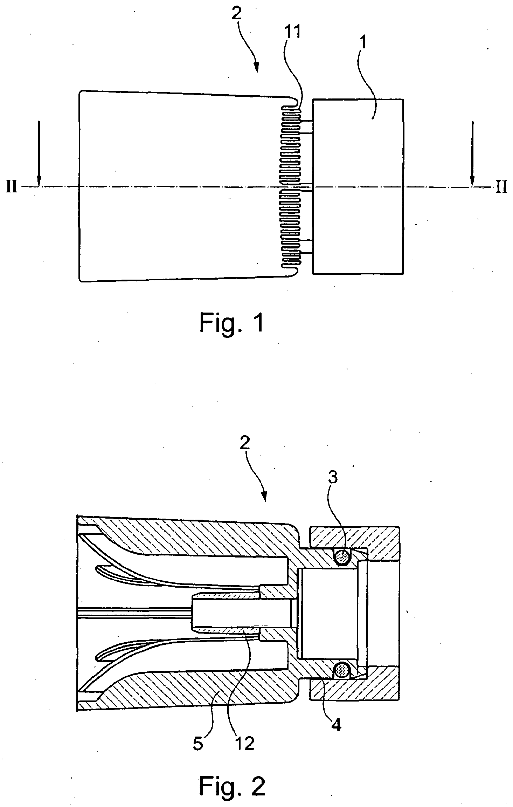

Figur 1 zeigt die Anschlusselemente eines Tanks sowie der zugehörigen Filterpatrone. Tankseitig ist ein Anschlusssockel 1 dargestellt, der fest mit dem Boden eines zugehörigen Tanks verbunden, beispielsweise verschweißt, verklebt oder auf sonstige Weise befestigt wird. In diesen Anschlusssockel 1 ist das Tankanschlusselement 2 einer Filterpatrone, in nicht erfindungsgemäßer Weise, eingesetzt und mit einer Radialdichtung 3 abgedichtet. Das Tankanschlusselement zeigt einen Anschlussstutzen 4, der in ein nur teilweise dargestelltes Patronengehäuse 5 übergeht. In der Ausführungsvariante gemäß den Figuren 1 und 2 gelangt das Wasser über seitliche Schlitze 6 in das Patronengehäuse 5 und passiert anschließend ein nicht näher dargestelltes Filterbett. Die Filterstrecke kann dabei im Aufstrom, im Abstrom oder in Kombination mit beiden Strömungsführungen ausgebildet sein. Durch das Abflussrohr gelangt das gefilterte Wasser letztendlich in den Sauganschluss des nicht mehr dargestellten Wassertanks.

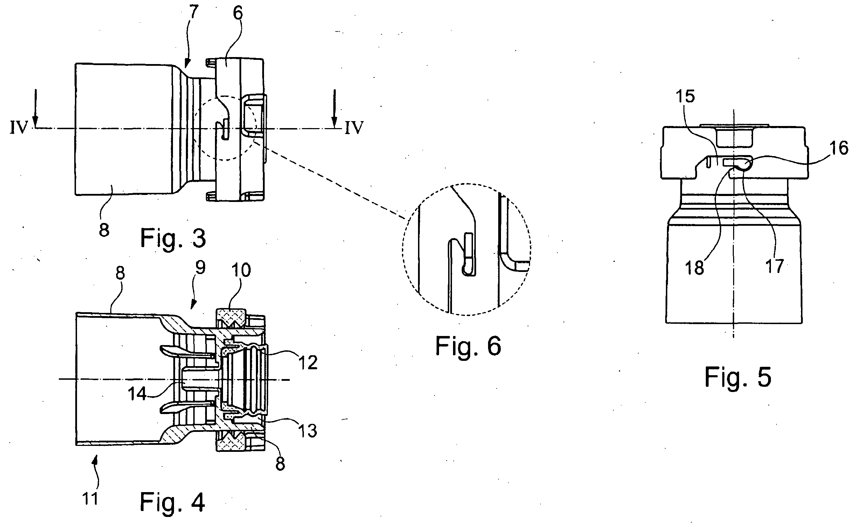

Figur 3 zeigt eine andere, nicht erfindungsgemäße Ausführungsvariante mit Anschlusssockel 8 und Tankanschlusselement 9, auch hier ist ein Anschlussstutzen 10 vorgesehen, der in den Anschlusssockel 8 eingefügt ist. Der Anschlussstutzen 10 geht über in ein Patronengehäuse 11, dass wiederum nur teilweise dargestellt ist. In dieser Ausführungsvariante ist eine Axialdichtung 12 vorgesehen, die die Filterpatrone gegenüber einem nicht näher dargestelltem Tankboden abdichtet.

In der Ausführungsvariante gemäß den Figuren 3 und 4 gelangt das Wasser über den Zwischenbereich 13 zwischen dem Anschlussstutzen 10 und der Axialdichtung 12 in das Filtergehäuse. Hierzu sind nicht näher dargestellte Siebschlitze vorgesehen, die den Eintritt in das Filterpatronengehäuse 10 ermöglichen. Über das innere Abflussrohr 14 gelangt auch hier gefiltertes Wasser nach einer Filterstrecke mit beliebiger Strömungsführung, z. B. im Aufstrom, im Abstrom oder in Kombinationen von Auf- und Abstrom, wieder in den Abflussbereich des zugehörigen Tanks.

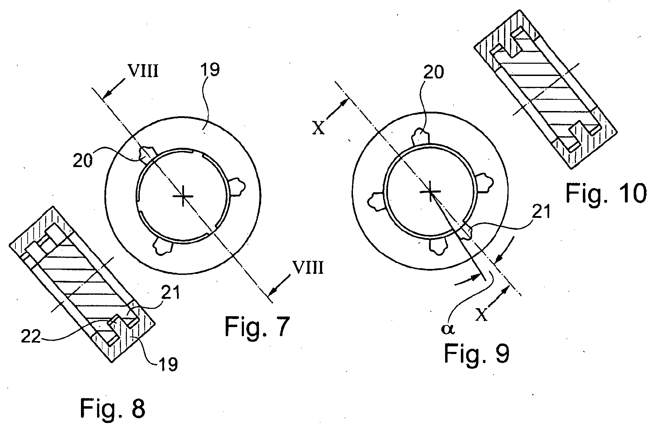

Die Ausführungsform gemäß den Figuren 3 und 4 ist, nicht erfindungsgemäße, mit einem Bajonettverschluss versehen, der in den Figuren 5 und 6 näher dargestellt ist. Hierzu ist der Anschlusssockel 8 mit Aufnahme und Führungsbahnen 15 versehen, in die radial vom Anschlussstutzen 10 abstehende Vorsprünge 16 eingeführt werden. Durch entsprechende Rastelemente 17, 18 in den Vorsprüngen der Filterpatrone einerseits sowie in den Aufnahme- und Führungsbahnen 15 andererseits ergibt sich eine Verrastung der Filterpatrone im Anschlussstutzen 10 durch eine Drehbewegung. Hierdurch wird eine definierte Endposition der Filterpatrone erreicht. Weitergehende Halterungen sind nicht mehr erforderlich, da durch diese Art des Bajonettverschlusses die Filterpatrone mit der Axialdichtung 12 zuverlässig am Boden gehalten wird. In der Ausführung gemäß den Figuren 3 bis 6 stellen bereits die Vorsprünge 16 sowie die zugehörigen Aufnahme- und Führungsbahnen 15 eine nicht erfindungsgemäße Art einer Kodierungsstruktur dar. Sowohl in dieser Ausführung als auch in der Ausführung gemäß den Figuren 1 und 2 können zusätzliche erfindungsgemäße Kodierungsstrukturen vorgesehen werden. Figur 7 zeigt in der Draufsicht eine mögliche Ausgestaltung eines Anschlusssockels 19 mit drei Öffnungen 20, die nach Art eines Schlüssellochs geformt sind. Diese Öffnungen 20 bilden durch ihre Anordnung und Formgebung eine radiale, nicht erfindungsgemäße Kodierungsstruktur. In diese Öffnungen 20 können, wie in Figur 8 erkenntlich ist, nicht erfindungsgemäße Kodiervorsprünge nach Art von Schlüsselbärten eingeführt werden. Im zugehörigen Anschlusssockel 19 kann darüber hinaus eine passende Kodierfeder 22 ausgebildet sein, die in die zwischen den Kodiervorsprüngen 21 gebildete Nut passt. Beim Einsetzen und Verdrehen einer Filterpatrone in den Anschlusssockel 19 wirken demnach die Öffnungen 20, die Kodiervorsprünge 21 sowie die Kodierfeder 22 miteinander und ergeben somit Kodierstrukturen, die nur ein Einsetzen einer Filterpatrone mit entsprechenden Strukturen erlaubt.

Die Ausführungsform gemäß den Figuren 9 und 10 entspricht der vorbeschriebenen Ausführungsvariante, wobei nunmehr anstelle eines dreifachen ein vierfaches Schlüssel-Schlossprinzip dargestellt. Anstelle von drei Öffnungen 20 sind nunmehr vier Öffnungen vorgesehen. Darüber hinaus ist der Drehwinkel α dargestellt, mit dem die Kodiervorsprünge 21 gegenüber den Öffnungen 20 verdrehbar sind, um die Einbauposition zu erzielen.

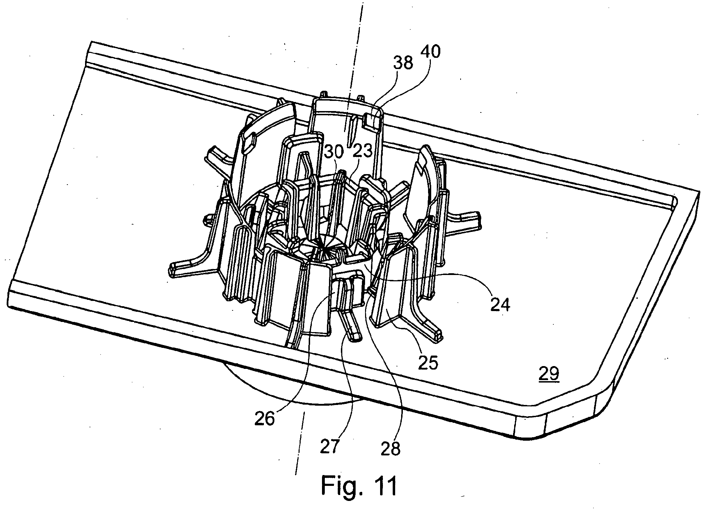

Figur 11 zeigt eine gegenüber dem vorgenannten Ausführungsbeispiel verschiedene Art der Kodierung.

Ein tankseitiger Anschlusssockel 23 weist eine sechskantförmige Außenkontur auf, dessen umfangseitige Außenfläche eine Dichtfläche 24 bildet. Außerhalb um den Sockel 23 sind Außenschalen 25 angeordnet, die geeignet sind, ein Filterpatronengehäuse bzw. dessen Anschlussbereich von außen wenigstens teilweise zu umschließen.

Im Zwischenraum zwischen dem Anschlusssockel 23 und den Außenschalen 25 sind Sperrelemente 26 angebracht, die sicherstellen, dass nur eine schmale, auf die Dichtfläche 24 passende Dichtung in den Bereich des Anschlusssockels 23 eingeführt werden kann.

Bodenrippen 27, 28 verhindern eine Abdichtung gegenüber dem Tankboden 29, ebenso wie Innenrippen 30 das Abdichten mittels einer inneren Radialdichtung verhindern. Durch diese Strukturen ist einzig und allein die Dichtfläche 24 als Dichtfläche zugänglich, so dass durch die Sechskantaußenkontur der Dichtfläche 24 eine erfindungsgemäße Kodierstruktur vorliegt.

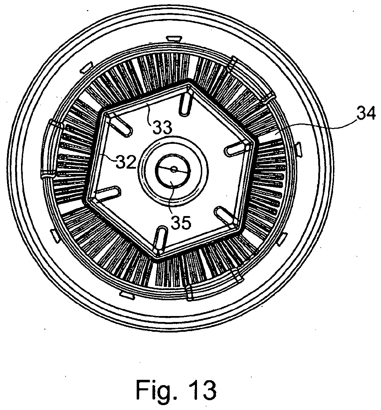

Die eingesetzte Filterpatrone 31 ist mit einer Formdichtung 32 versehen, die dementsprechend ebenfalls einen Sechskantquerschnitt aufweist (vergleiche Figur 13). Die Innenfläche der Formdichtung 32 bildet dabei die Dichtfläche 33.

In Figur 13 sind darüber hinaus die Eintrittsschlitze 34 zur Wasserzufuhr in die Filterpatrone sowie eine Abflussöffnung 35 für die Wasserabfuhr erkennbar.

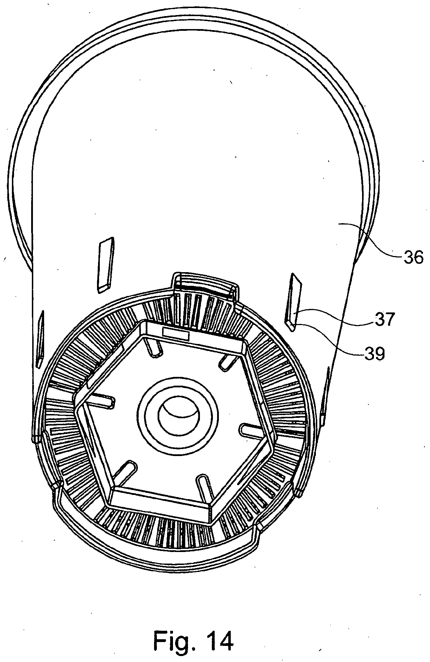

Ober die Formdichtung 32 mit entsprechend geformtem Anschlusssockel 23 umfasst die dargestellte Ausführungsform noch weitere Kodierungsstrukturen. So sind außen am Filterpatronengehäuse 36 Schnappelemente 37 (vgl. Figur 14) angeformt. Die Schnappelemente 37 sind in entsprechende Aufnahmen 38 der Außenschalen 25 einführbar. Beim Aufsetzen der Unterkante 39 am Anschlag 40 der Aufnahmen 38 ergibt sich ein Druckpunkt. Bis in diese Position lässt sich die Filterpatrone 31 leicht ohne Gegenwiderstand in der richtigen Winkelposition aufsetzen. In dieser Winkelposition befindet sich die Formdichtung 32 ausgerichtet gegenüber der Dichtfläche 24 des Anschlusssockels 23, so dass sie in axialer Richtung weiter einführbar ist. Durch weiteres Eindrücken in axialer Richtung schnappt das Schnappelement 37 über den Anschlag 40, wobei die Formdichtung 32 entlang der Dichtfläche 24 eingedrückt wird. Durch die Abschrägung der Schnappelemente 37 und die entsprechende Innenform der Außenschalen 25 wird die Filterpatrone 31 in den Außenschalen 25 fixiert. Weitere axiale Fixierungselemente sind in dieser Ausführungsform nicht mehr erforderlich.

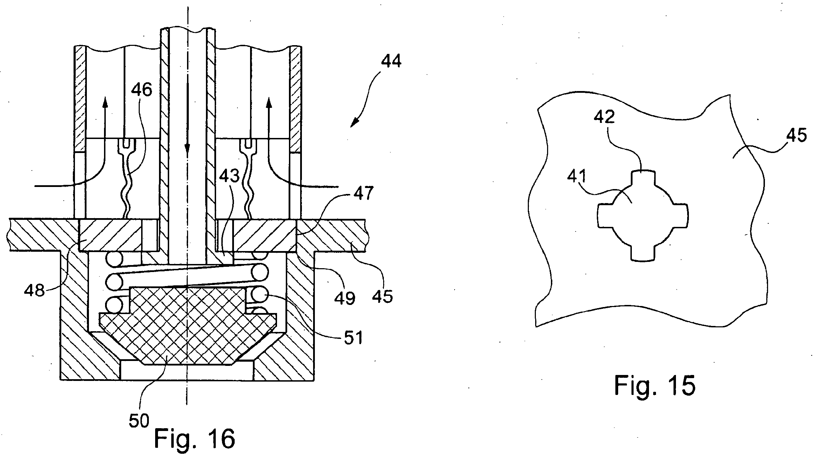

Eine weitere, nicht erfindungsgemäße Ausführungsvariante ist in Figur 15 dargestellt. Figur 15 zeigt einen Bodenausschnitt eines Tanks, der eine Bodenöffnung 41 aufweist, die durch ihre Kontur als Schlüsselloch dient. Beispielsweise ist die Außenkontur im vorliegenden Ausführungsbeispiel mit Nuten 42 versehen. Die Kontur dieser Bodenöffnung 41 ist als Kodierungsstruktur jedoch frei wählbar.

Angepasst an diese Kontur der Bodenöffnung 41 sind entsprechende Schlüsselelemente im filterseitigen Tankanschlussbereich 44 vorgesehen. Vorliegend sind, nicht erfindungsgemäße Schlüsselelemente 43 hakenförmig ausgebildet, so dass sie durch die Nuten 42 durch den Tankboden 45 hindurchgeführt werden können und anschließend durch Verdrehen hinterschneidend den Boden 45 umgreifen. Auch hierdurch ist eine Art Bajonettverschluss realisiert. Durch diesen Verschluss wird die Filterpatrone am Boden 45 fixiert. Über eine Axialdichtung 46 ist der Zustrombereich wie mit aufwärts gerichteten Pfeilen dargestellt vom Abstrombereich (siehe abwärts gerichteten Pfeil) abgedichtet. Auch in dieser Ausführung ist die Strömungsführung im Filterbett beliebig gestaltbar.

Durch die Formgebung der Bodenöffnung 41 kann verhindert werden, dass in der Bodenöffnung 41 mit einer Radialdichtung gedichtet wird. Durch nicht näher dargestellte Rippen und/oder Nuten auf dem Boden 45 kann darüber hinaus verhindert werden, dass eine bodenseitige Abdichtung außerhalb des für die Axialdichtung 46 vorgesehenen Ortes möglich ist. Derartige Rippen können dabei auch so hoch ausgeführt werden, dass sie der Patrone außenseitig zusätzlich Halt geben.

In Figur 16 ist ein unterhalb des Bodens 45 angeordnetes Rückschlagventil eingezeichnet, das den Tank bei angehobenem Zustand abdichtet und das beim Aufsetzen in die zugehörige Maschine nach oben eingedrückt wird, so dass die entsprechende Öffnung freigegeben wird.

Eine Trennlinie 47 veranschaulicht eine mögliche Fertigungsart eines solchen tankseitigen Filteranschlusses. Das Schlüsselloch bzw. die Bodenöffnung 41 ist hierbei in einer Scheibe 48 angeordnet, die separat vom sonstigen Tank gefertigt wird. Auf diese Weise kann der Tank und insbesondere auch der dargestellte Bereich in einem Spritzvorgang gefertigt werden, so dass die Außendichtigkeit zuverlässig gewährleistet werden kann. Anschließend wird eine Scheibe 48 eingelegt, was problemlos durch die Ringschulter 49 möglich ist. Die Scheibe 48 kann sodann auf beliebige Weise mit dem Tankboden 45 verbunden, beispielsweise verschweißt, insbesondere ultraschallverschweißt, werden. Vor dem Einlegen der Scheibe 48 kann darüber hinaus das Ventil, beispielsweise in Form des Ventilkörpers 50 mit Feder 51 eingesetzt werden.

Diese Bauweise bietet neben der günstigen Art der Fertigung auch die Möglichkeit, die nicht erfindungsgemäße Kodierung durch die Bodenöffnung 41 als Schlüsselloch äußerst flexibel und variabel zu gestalten, in dem lediglich eine andere Scheibe 48 eingesetzt wird. Die Kodierung auf unterschiedliche Tank- bzw. Maschinentypen ist hierdurch besonders einfach möglich. Die Anpassung einer zugehörigen Filterpatrone kann ebenfalls durch einfaches Abändern der nicht erfindungsgemäßen Schlüsselelemente 43 erfolgen, ohne dass hierzu aufwendige Maßnahmen an der Filterpatrone erforderlich sind. Bei dieser Ausführungsvariante ist die Bodenfixierung durch hintergreifende Schlüsselelemente 43 in Verbindung mit der Axialdichtung 46 von besonderem Vorteil, da die Fixierung und die nicht erfindungsgemäße Kodierung wenigstens teilweise durch die gleichen Bauelemente vorgenommen wird.

In einer Abwandlung dieser Ausführungsform wird die Scheibe 48 nicht flach ausgestaltet, sondern als Dom oder Erhebung aus dem Tankboden ausgebildet, die sich ins Innere des Tanks erstreckt und auf der sodann die Filterpatrone fixierbar ist. Diese Ausgestaltung hätte den Vorteil, dass bereits vorhandene Ventilformen und Tankelemente im Bereich des Tankanschlusses beibehalten werden können.

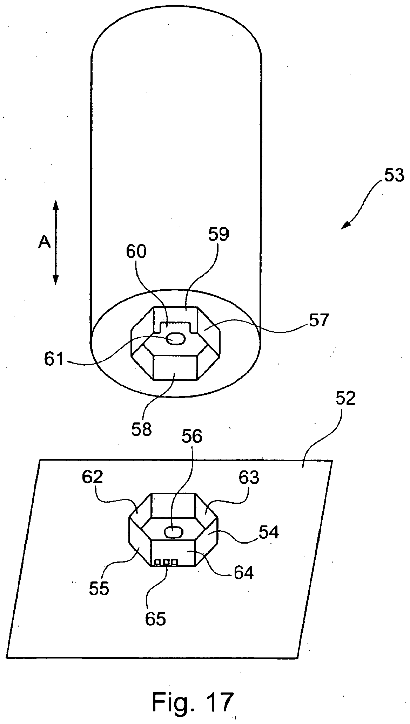

Fig. 17 zeigt eine schematisch dargestellte Ausführungsform mit winkelabhängig einstellbarer Verschnittmenge. Der Tankboden 52 ist nur ausschnittsweise im Anschlussbereich der Filterpatrone 53 dargestellt. Der Tankboden 52 umfasst einen sechskantförmigen Anschlusssockel 54, der nach oben hin nach Art eines Pyramidenstumpfes leicht konvergiert. Diese Querschnittsverjüngung ist in der perspektivischen Darstellung kaum zu erkennen.

Die Außenflächen 55 des Anschlusssockels dienen zugleich als Dichtfläche, um die Abflussleitung 56 bei aufgesetzter Filterpatrone 53 ganz oder teilweise gegenüber dem Innenraum des Tanks abzudichten.

Die Filterpatrone 53 weist eine zum Anschlusssockel 54 korrespondierende sechskantförmige Dichtung 57 auf. Die einzelnen Wände 58 sind mit Ausnahme einer Wand 59 in axialer Richtung A gleich lang ausgebildet. Die Wand 59 ist mit einer unterseitigen Aussparung 60 versehen, deren Funktion nachfolgend näher erläutert wird. Im Inneren der Dichtung 57 ist der Ausgang 61 aus der Filterpatrone 53 erkennbar, durch den das gefilterte Wasser in die Abflussleitung 56 gelangt.

Verschiedene Sockelwände 62, 63, 64 des Anschlusssockels 54 sind mit einer unterschiedlichen Anzahl von Bypassöffnungen 65 versehen. Die Bypassöffnungen 65 sind so angeordnet, dass sie von den länger ausgebildeten Dichtungswänden 58 beim Aufstecken der Filterpatrone 53 dicht verschlossen werden. Lediglich dort, wo die Wand 59 mit Aussparung 60 zum Einsatz kommt, können die Bypassöffnungen 65 geöffnet bleiben, so dass über die Aussparung 60 gefiltertes Wasser unmittelbar aus dem Tank zum Bereich der Abflussleitung 56 gelangt.

Wie anhand des dargestellten Ausführungsbeispiels unschwer erkennbar ist, wird durch die Winkelanordnung der Filterpatrone, d.h. mit der Auswahl der Sockelwand 62, 63, 64, an der die Aussparung 60 angesetzt wird, die Größe des freien Querschnitts der Bypassöffnungen 65 eingestellt.

In der vorliegenden Ausführungsform summieren sich die Querschnittsöffnungen der mehrfach angebrachten Bypassöffnungen 65. In anderen Ausführungsformen können auch einfach unterschiedlich große Bypassöffnungen 65 vorgesehen werden. Durch die unterschiedlichen Querschnitte einzelner Bypassöffnungen 65 oder in der Summe mehrerer Bypassöffnungen 65 an einer Sockelwand, beispielsweise der Sockelwand 64, ergeben sich unterschiedliche Anteile an ungefiltertem Wasser, die gefilterten Wasser beigemengt werden. Es ergibt sich somit eine Verschnitteinstellung, die abhängig ist von der Winkelposition der Filterpatrone 53.

Neben den dargestellten Ausführungsformen sind ohne Weiteres weitere Ausführungsformen oder Kombinationen dieser Ausführungsformen denkbar. So können beispielsweise die nicht erfindungsgemäße Kodierungsstrukturen, die an Hand der Anschlusssockel 1 und 8 gemäß den Figuren 7 bis 10 beschrieben, auch in der Wand der Bodenöffnung 41 bzw. an einem auf oder unter der Bodenöffnung angesetzten Kragen untergebracht und mit Schlüsselelementen, die wie im vorgenannten Ausführungsbeispiel innen aus der Filterpatrone herausragen, kombiniert werden.

Auch die Umkehrung eines solchen Prinzips in Form von am Tankboden angebrachten Schlüsselelementen, die in die Filterpatrone hineinragen und dort auf entsprechende passende Gegenkonturen treffen, wäre denkbar.

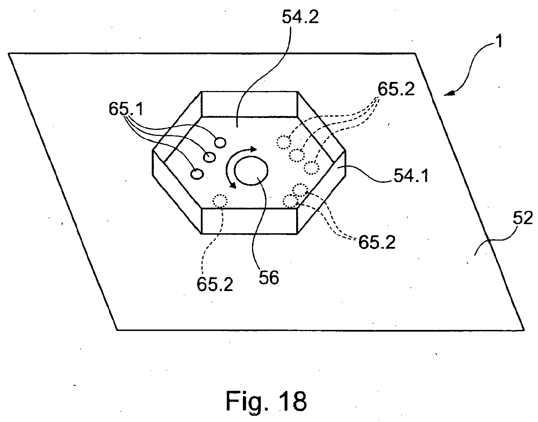

Eine weitere, mögliche Ausführungsform einer Verschnitteinstellung kann z.B. durch die Ausbildung eines durch die Filterpatrone betätigbaren Mitnehmerelementes in der Form eines in seiner Position drehbar verstellbaren Anschlusssockels 54.1 entsprechend der Dartellung in der Figur 18 realisiert werden. Der Boden 54.2 des drehbaren Anschlusssockels 54.1 weist hier beispielhaft drei Bypassöffnungen 65.1 auf und kann je nach Drehposition gegenüber dem Tankboden 52 so angeordnet werden, dass im Tankboden 52 angeordnete, komplementäre Bypassöffnungen 65.2 fluidleitend freigegeben bzw. verschlossen werden.

In dieser Darstellung sind rein beispielhaft vier unterschiedliche Einstellungen dargestellt, die gezeigte Drehposition mit verschlossenem Bypass und drei weitere Positioniermöglichkeiten, mit der Freigabe von jeweils einem, zwei oder allen drei Bypasslöchern 65.1 durch Übereinstimmung in ihrer Lage mit den entsprechenden Bypasslöchern 65.2. Eine mögliche Trennvariante zwischen den mit dem tankseitigen Frischwasseranschluss verbundenen Bypasslöchern 65.1 und der beispielhaft zentral angeordneten Abflussleitung 56 wäre die Anordnung einer dazwischen liegenden Dichtung, insbesondere und vorzugsweise einer Axialdichtung, die sich zwischen der Stirnseite des filterseitigen Tankanschlusselementes und dem Boden 54.2 des Anschlusssockels 54.1 dichtend erstreckt. Denkbar sind durchaus aber auch andere ggf. auch zusätzliche trennende und/oder dichtende Elemente zwischen der Frischwasserseite und der Seite des gefilterten Wassers.

Neben den dargestellten Ausführungsformen sind ohne Weiteres auch weitere Ausführungsformen und/oder Kombinationen mit dieser Ausführungsform denkbar. So können beispielsweise die bisher beschriebenen Kodierungsstrukturen in der Form von beispielhaft dargestellten, sechskantigen Polygonen durch andere Kodierstrukturen, wiederum beispielhaft z. B. in der Form von Vierkantpolygonen ergänzt und/oder kombiniert werden, wie sie beispielsweise durch nicht erfindungsgemäße eine Ausführungsform der Figur 6 zusätzlich beispielhaft gezeigt ist.

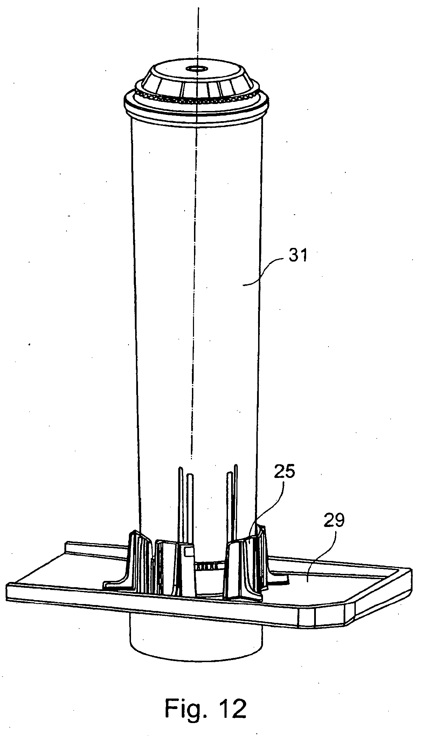

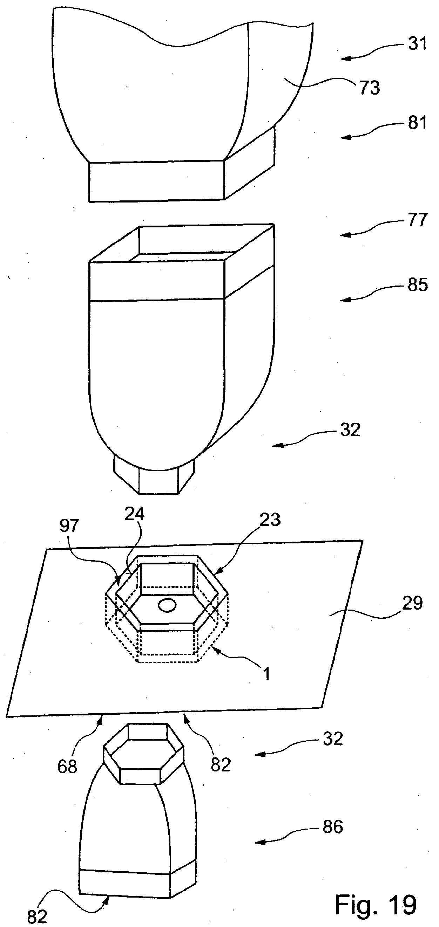

Die Figur 19 zeigt schließlich neben einer im Vergleich zu den Ausführungsformen in den Figuren 11 bis 14 und 17 beschriebenen Sockel-Filterverbindung in der Form eines axialen Vorsprungs 23 am tankseitigen Filteranschlusselement 23 eine komplementäre Form als im Tankboden 29 ausgebildete axiale Ausnehmung 23, bei der sinngemäß alle zu der ersten Ausführungsform beschriebenen Kodierungsmöglichkeiten auch hier realisiert werden können, und zwar gleich.

Als zweites wesentliches Merkmal zeigt die Figur 19 die Möglichkeit der Verwendung von Adaptern 85, 86. Der Adapter 85 ist rein beispielhaft zum Anschluss einer ebenfalls beispielhaft dargestellten Filterpatrone 73 an einen tankseitigen Filteranschluss 1 dargestellt, wobei die Ausführungsform des Filteranschlusses 1, insbesondere seines Sockels 23, wie oben bereits dargelegt, sowohl als axial vorstehender Sockel als auch als axial vertieft ausgebildete Nut realisiert sein kann. Das Gleiche gilt sinngemäß für den tankseitigen Geräteanschluss an der Unterseite des Tankbodens 29. Aufgrund der sinngemäß gleichen Funktionalitäten sind auch die einzelnen Elemente mit den gleichen Nummerierungen versehen, wie zum Teil bereits oben in der Beschreibung verwendet. Von der Darstellung von Details zur Verschneidevorrichtung wurde aus Übersichtsgründen unter Verweis auf die Beispiele in den Figuren 17 und 18 abgesehen, derartige Ausführungen sind aber auch hier in entsprechender Weise möglich.

Die dargestellten Ausführungsvarianten zeigen auch die unterschiedlichsten Kodierungsstrukturen, die erfindungsgemäß vorzusehen sind. In jedem Fall ist gewährleistet, dass nur entsprechend angepasste Filterpatronen mit Schlüsselfunktion in die entsprechenden tankseitigen Filteranschlüsse passen.

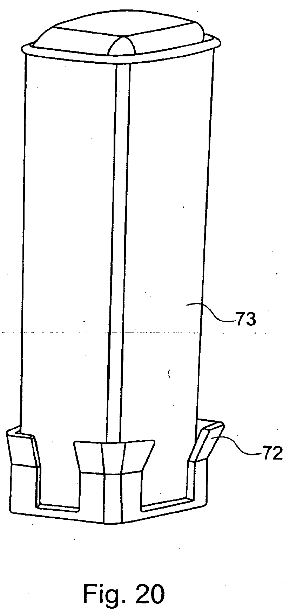

In einer weiteren Ausführungsform können beispielsweise die bisher beschriebenen Kodierungsstrukturen in der Form von beispielhaft dargestellten, sechskantigen Polygonen durch andere Kodierstrukturen, wiederum beispielhaft z. B. in der Form von Vierkantpolygonen ergänzt und/oder kombiniert werden, wie sie beispielsweise durch eine nicht erfindungsgemäße Ausführungsform der Figuren 20 bis 31 zusätzlich beispielhaft gezeigt ist.

Im Detail zeigt die Figur 20 einen Anschlusssockel 72, der in Draufsicht eine nicht erfindungsgemäße viereckige Kontur aufweist und in welcher eine entsprechend geformte Patrone 73 mit einem komplementären, ebenfalls im Querschnitt viereckigen Anschlussstück eingesteckt ist. Der Übersichtlichkeit halber wurde hier von der Darstellung des Tanks und des Tankbodens, mit welchem der Anschlusssockel 72 dichtend zu verbinden ist, abgesehen.

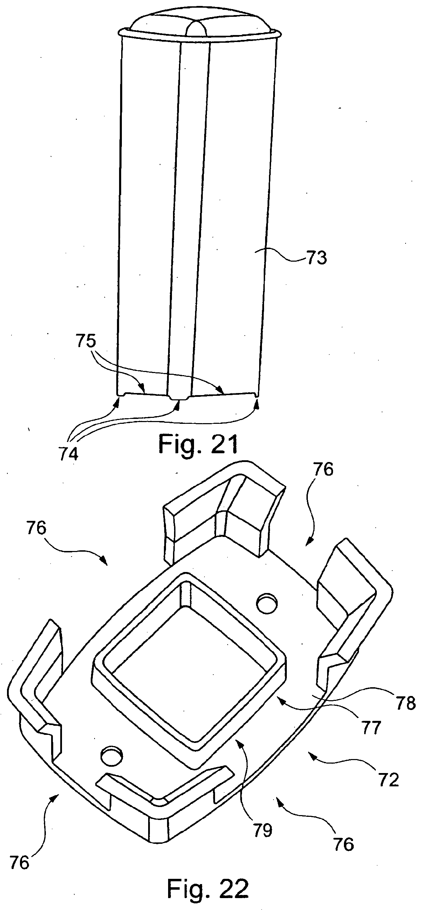

Die Figuren 21 und 22 zeigen die Patrone 73 und das Anschlusselement 72 jeweils in alleiniger Darstellung. Im unteren Bereich der Patrone 73 sind drei von vier vorgesehenen Füßen 74 erkennbar, zwischen denen jeweils eine für den Eintritt von Frischwasser ausreichend große Zulauföffnung 75 bei im Anschlusselement 72 eingesteckte Patrone 73 ausgebildet ist. Das Anschlusselement 72 weist entsprechend komplementäre Einlassöffnungen für den Durchtritt des Frischwassers aus dem Tank hin zur Filterpatrone 73 auf. Ein beispielsweise dem Anschlusssockel 23 entsprechender Anschlusssockel 77 ist beispielhaft zentral an einer Bodenplatte 78 des Anschlusselementes 72 ausgebildet, wiederum in Form eines Vorsprungs. Dieser als Vorsprung ausgebildete Anschlusssockel 77 weist an seiner äußeren Umfangfläche eine Dichtfläche 79 auf, die gegenüber einer komplementären, an der Filterpatrone angeordnete Aufnahmestruktur den Frischwasserbereich vom Bereich des durch den Filter gefilterten Wassers dichtend trennt. Auch in dieser viereckigen Ausführungsform kann in bevorzugter Weise dem Anschlusssockel 77 eine zumindest leicht konische Form aufgeprägt sein, so dass die aufzusetzende Patrone mit ihrem Anschlussstück einerseits leichter aufzusetzen ist und andererseits auch eine größere Fläche für die Abdichtung zwischen den beiden Elementen zur gegenseitigen Abdeckung gebracht werden kann.

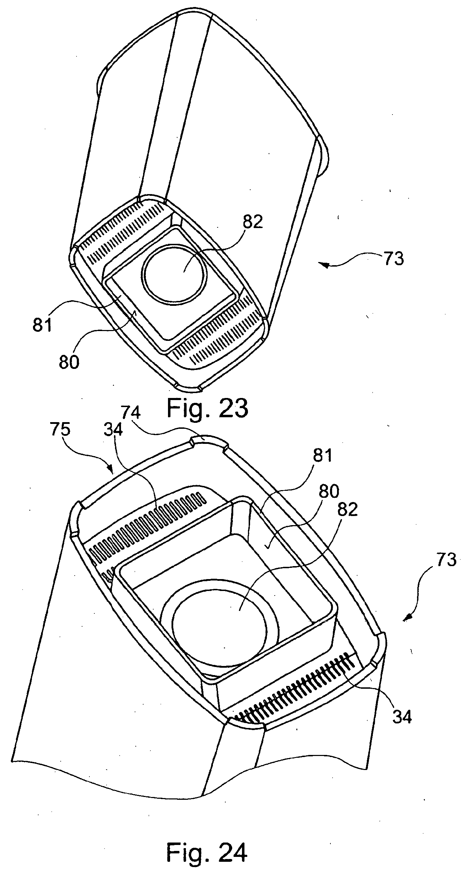

Die Figuren 23 und 24 zeigen jeweils eine Patrone 73 in einer Unteransicht, in welcher eine zum Anschlusssockel 77 komplementäre Formdichtung 81 mit einer darin ausgebildeten Dichtfläche 80 dargestellt ist. Zentral in der Mitte ist beispielhaft der Auslauf 82 für das gefilterte Wasser zu erkennen, welches durch die Zulaufsschlitze 34 in der Filter einströmen kann.

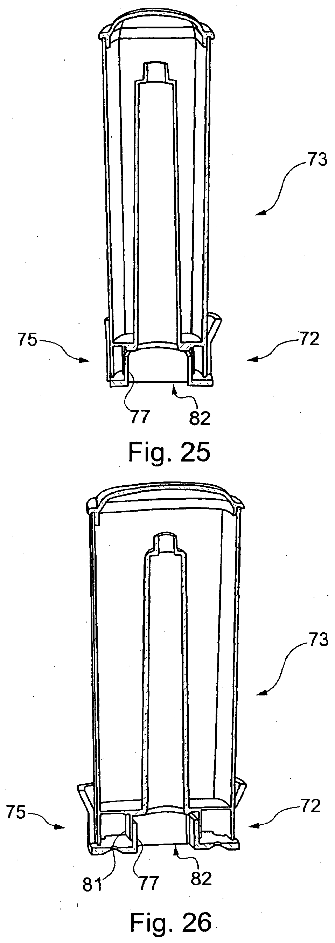

Die Figuren 25 und 26 zeigen jeweils einen Längsschnitt durch das Anschlusselement 72 und eine darin eingesteckte Patrone 73, einmal entlang der Breitseite (Figur 25) und einmal entlang der Längsseite (Figur 26), der in Draufsicht rechteckigen Anschlussstruktur.

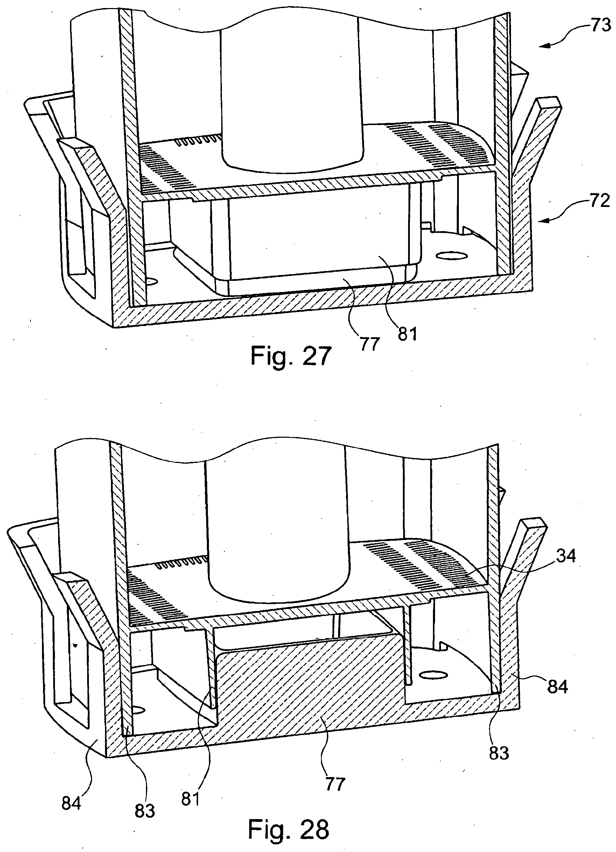

Die Figuren 27 und 28 zeigen zwei Ausschnitte im Verbindungsbereich zwischen Anschlusssockel 77 und Patrone 73 mit darin angeordneter Formdichtung 81, jeweils in unterschiedlich tief gelegener Schnittebene. Insbesondere in der Figur 28 ist gut zu erkennen, dass neben der formschlüssigen Verbindung zwischen der Formdichtung 81 und dem Anschlusssockel 77 auch eine fixierende Wirkung zwischen der verlängerten Außenwand 83, der Filterpatrone 73 und den Elementen der Außenschale 84 gegebenen ist, vorzugsweise ebenfalls in einer formschlüssigen Art und Weise.

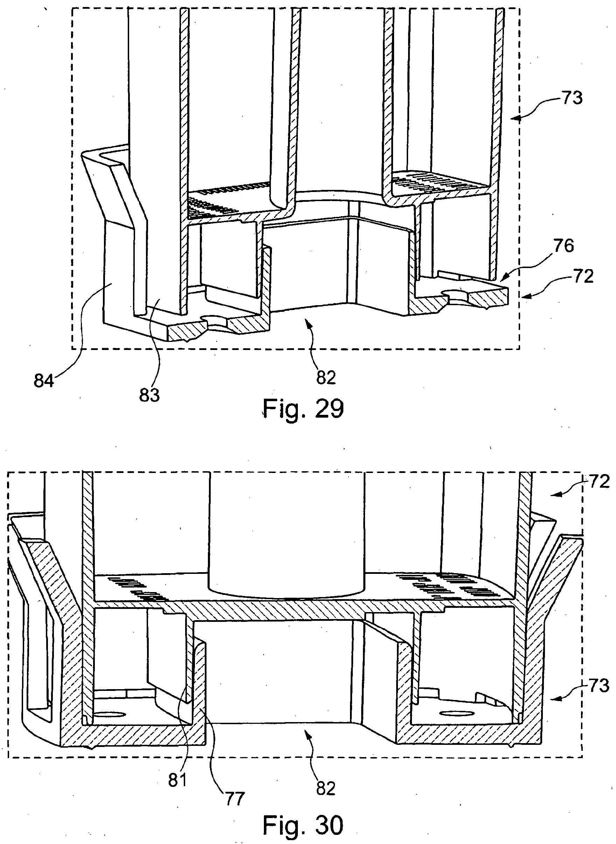

Die Figuren 29 und 30 zeigen zwei weitere Schnittdarstellungen entsprechend der Figuren 27 und 28, jedoch wiederum in verschieden tief liegenden Schnittebenen.

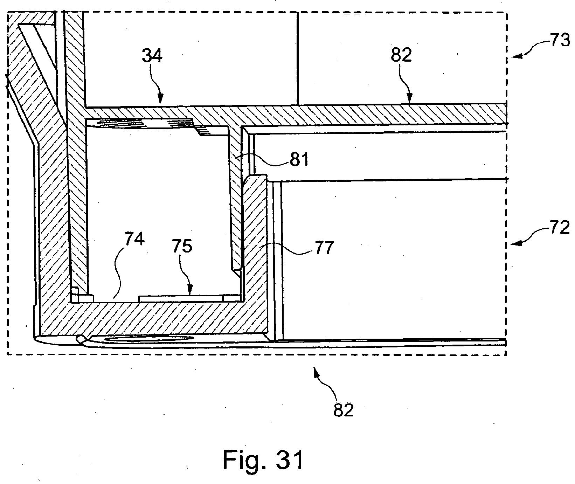

Die Figur 31 zeigt schließlich eine weitere, ausschnittsweise Darstellung in noch größerem Maßstab.

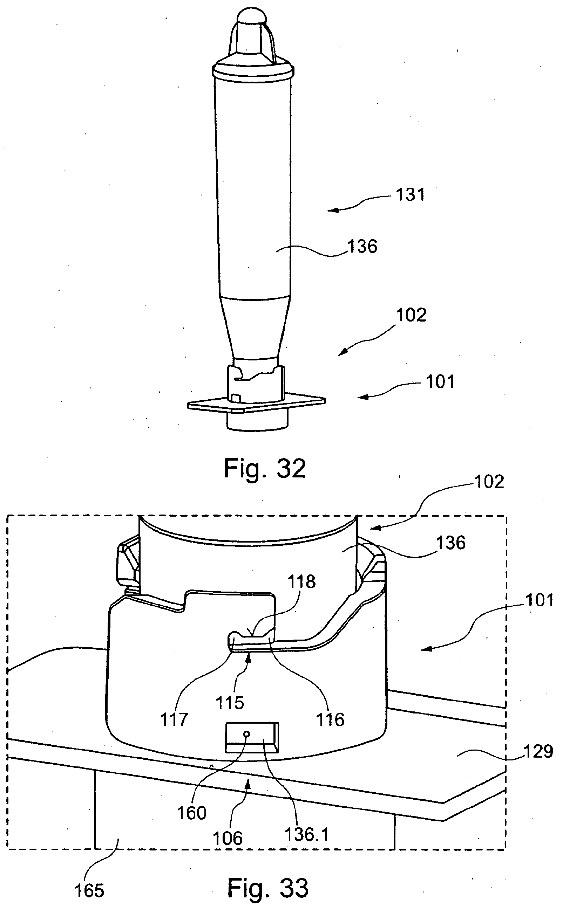

Nachfolgend werden noch weitere, mögliche, nicht erfindungsgemäße Ausführungsformen beschrieben. In den Figuren 32 bis 39 wird ein Tank-Filterpatronen-Anschluss mit Verschnitteinstellungselementen 106, 136.1, 160 und 165 sowie mit in Bezug auf eine Längsachse des Anschlusses axial ausgerichteten Verschlüsselungs- bzw. Kodierungsstrukturen in Kombination mit einer weiteren Ausführungsform einer Formschlussdichtung beschrieben. Der Einfachheit halber werden bereits zu den zuvor beschriebenen Ausführungsformen entsprechende Merkmale mit der gleichen Grundnummerierung, jedoch um die Nummer 100 erhöht bezeichnet.

Demnach zeigt die Figur 32 einen tankseitigen Anschlussstutzen 104 in welchem eine Filterpatrone 131 über einen filterseitigen Tankanschlussstutzen 101 angeschlossen ist. Entsprechend der Figur 33 steckt das Gehäuse 136 der Filterpatrone 131 vollkommen im tankseitigen Anschlussstutzen 101. Das stirnseitige Ende des Patronengehäuses 136 ist in der Figur 33 hinter einem Durchlassschlitz 106 für den Zulauf des im Tank befindlichen Frischwassers in den Innenbereich des Anschlussstutzens 101 dargestellt. In diesem sichtbaren Abschnitt des Filterpatronengehäuses 136 ist eine Aussparung 160 in der Form einer Bohrung dargestellt, die die Funktion eines Verschnittelementes inne hat, und Frischwasser durch sie hindurch und durch eine weitere, dahinter angeordnete, hier nicht sichtbare Öffnung 165 in den Filterauslassbereich 135 strömen lässt, in welchem das von der Patrone gefilterte Wasser in den Tankauslass 168 geleitet wird. Die Verschnitteinstellung kann auch hier z.B. über entsprechende Drehpositionen verändert werden, sofern eine Ausführung mit verstellbarem, wirksamem Verschneidequerschnitt vorgesehen ist. In einer einfachen Ausführung, wie dargestellt, ist auch eine feste Verschnitteinstellung möglich, die z.B. von einer Drehposition unabhängig ist.

Als eine von mehreren möglichen Fixierung der Filterpatrone 131 am tankseitigen Anschlussstutzen 101 sind an diesem eine Aufnahme-Führungsbahn 115 zur Aufnahme eines an der Filterpatrone ausgebildeten, radialen Vorsprungs 116 dargestellt. Beide weisen ein jeweils zum Anderen komplementäres Rastelement 117 und 118 auf, die nach einer entsprechenden Drehbewegung beim Einsetzen des filterseitigen Tankanschlusselementes 102 nach Überwindung entsprechender Spannkräfte des etwa flügelartig vom tankseitigen Anschlussstutzen abstehenden Teils schnappend ineinander einrasten. Dadurch, dass das Rastelement 117 in seinem vorderen Bereich eine Verdickung aufweist, bezogen auf eine für den Einsatz der Filterpatrone erforderliche Drehbewegung, der eine entsprechend groß ausgesparter Bereich im Rastelement 118 gegenübersteht, kann damit eine positionssichernde Verrastung der beiden Anschlusselemente miteinander gewährleistet werden.

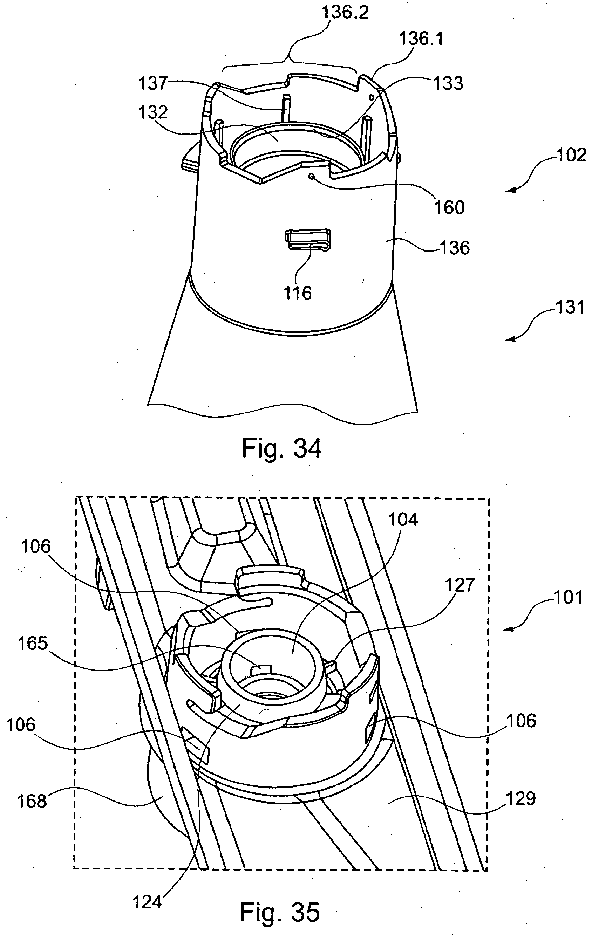

In der Figur 34 ist der filterseitige Tankanschlussbereich in der Filterpatrone 131 dargestellt, wobei das Gehäuse 136 im vorderen, stirnseitigen Bereich einem gegenüber Aussparungen 136.2 vorstehenden Vorsprung 136.1 aufweist, jeweils die bereits oben beschriebene Durchlassöffnung 160 als Verschnittelement umfassend. Die Vorsprünge 136.1 des Filterpatronengehäuses 136 stellen ihrerseits nicht erfindungsgemäße, axial ausgerichtete Kodierstrukturen dar, die einen betriebsgemäßen Einsatz der Filterpatrone im betreffenden Tankanschlusselement ermöglichen. Sobald eines dieser axialen Kodierungs- bzw. Verschlüsselungselemente in der Form der Gehäuseüberstände 136.1 fehlt, fließt im Tank befindliches Frischwasser direkt durch die einen entsprechend großen Querschnitt aufweisende Durchlassöffnung 106 und die dahinter liegende, ebenfalls einen entsprechend großen Querschnitt aufweisende weitere Bypassöffnung 165 direkt in den Geräteansaugbereich 168.

Eine gegebenenfalls eingesetzte Filterpatrone ohne entsprechende axial vorstehende Gehäuseflügel 136.1 wäre in diesem Fall aufgrund des großen Durchflusses von Frischwasser in den Zulaufbereich des Geräteanschlusses ohne Filterwirkung, wie dies deutlich aus der Figur 35 zu erkennen ist.

Die hier beschriebene Ausführungsform weist jeweils drei axial ausgerichtete Kodierstrukturen 136.1 am Filtergehäuse 136 auf, die insbesondere bevorzugt um 120° versetzt stirnseitig am Umfang des filterseitigen Tankanschlusselementes 102 angeordnet sind, wie aus der Figur 9 gut entnehmbar. Die komplementären Anschlusselemente des tankseitigen Filteranschlusses 101 zeigt die Figur 35.

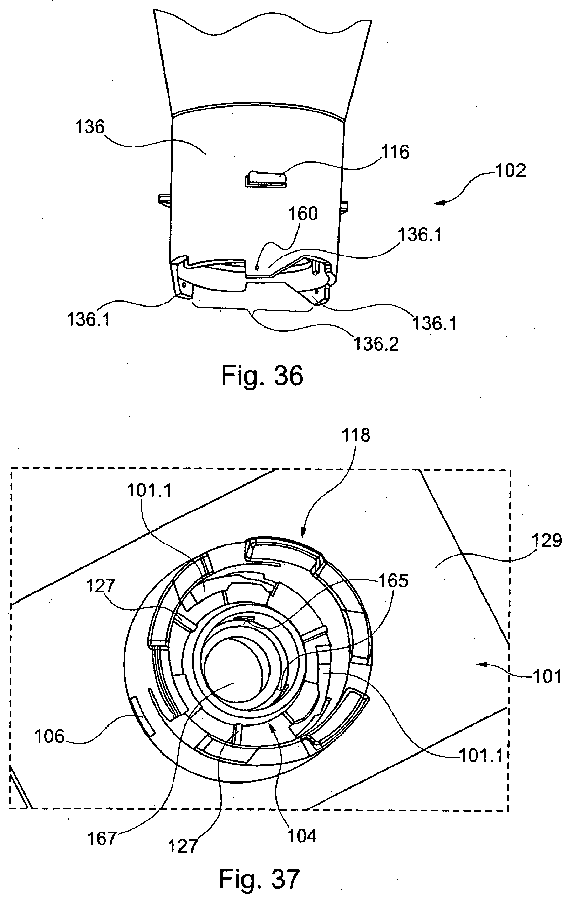

Die Figuren 36 und 37 zeigen zwei weitere Ansichten dieser Ausführungsform eines Tank-Filter-Anschlusses 101, 102. Am tankseitigen Filteranschluss 101 sind hierbei drei axiale Ausnehmungen 101.1 dargestellt, die im Tankboden 129 vertieft eingelassen sind um die drei komplementären Gehäuseüberstände 136.1 der Filterpatrone aufnehmen zu können. Somit sind hier wiederum axiale Vorsprünge 136.1 bzw. komplementäre axiale Vertiefungen 101.1 als nicht erfindungsgemäße Verschlüsselungs- bzw. Kodierstruktur zur Verhinderung nicht für den Einsatzzweck vorgesehener Filterpatronen dargestellt.

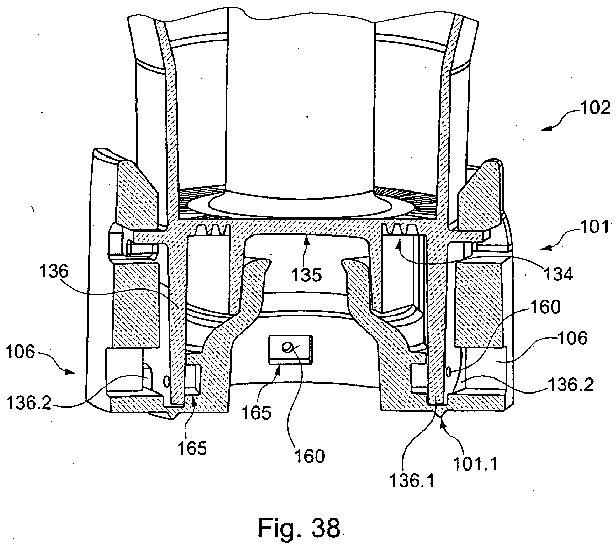

Die Figur 38 zeigt einen Schnitt durch ein tankseitiges Filteranschlusselement 101 in welchem ein filterseitiges Tankanschlusselement 102 eingesetzt ist. Im unteren, bodenseitigem Bereich des tankseitigen Filteranschlusselementes 101 sind hierbei die durch die drei Gehäuseüberstände 136.1 im Wesentlichen verschlossenen Bypass- bzw. Kurzschlussöffnungen 165 zur erkennen. Bei eingesetzter Filterpatrone wird die Bypassfunktion realisiert, so dass eine bestimmte Menge an Frischwasser dem von der Filterpatrone gefilterten und durch den Auslass 135 austretenden Filterwasser beigemengt wird. Bei fehlender Patrone ist diese axiale Kodierstruktur wirkungslos bzw. kann dieser tankseitiger Filteranschluss nur zur ungefilterten Durchleitung des im Tank befindlichen Frischwassers genutzt werden.

Bei eingesetzter Patrone kann durch die Aussparungen 136.2 durch den Schlitz 106 eintretendes Frischwasser im Inneren des Anschlussstutzens 104 aufsteigen und durch die Eintrittsschlitze 134 in die Filterkammer der Filterpatrone eintreten, durch das Filter hindurch fließen und aus der Filterauslassöffnung 135 in die Ansaugleitung des Tanks bzw. des Gerätes weitergeleitet werden.

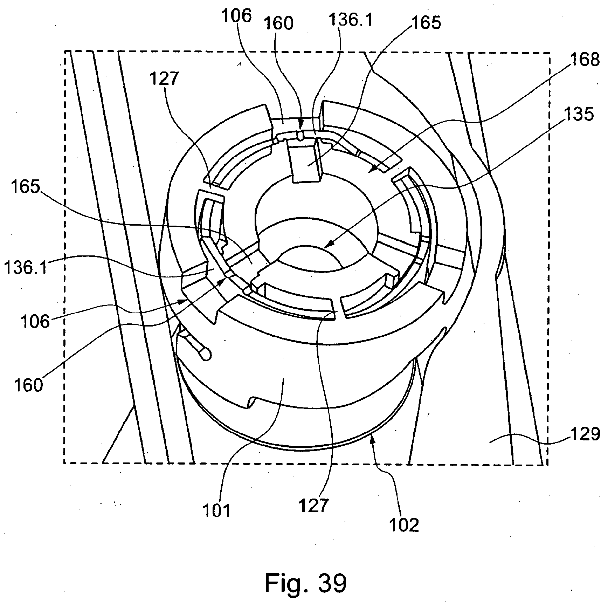

Die Figur 39 zeigt eine weitere Schnittansicht durch den Tankboden 129 und einen damit verbundenen tankseitigen Filteranschluss 101 sowie einen darin eingesetzten filterseitigen Tankanschluss 102 von der Bodenseite des Tanks her betrachtet. Darin sind die Bypass- bzw. Kurzschlussleitungen 106 und 165 sehr gut zu erkennen, die eine entsprechende Durchleitung des ungefilterten Frischwassers in den Tankablaufbereich 168 zeigen. Bei, wie im gezeigten Beispiel, eingesetzter Patrone mit korrekter axialer Kodierung erfolgt ein entsprechend vorgesehener Verschnitt des zu filternden Frischwassers durch die in den flügelartig vorstehenden Gehäuseabschnitten 136.1 ausgebildeten Bypasslöcher 160.

Anstelle der hier beispielhaft gezeigten, 120° versetzten drei axialen Kodierstrukturen können vier, fünf oder beispielsweise sechs solche Strukturen ausgebildet sein. Der Abstand der einzelnen komplementären axialen Kodierstrukturen kann dabei entweder symmetrisch oder aber auch unsymmetrisch ausgebildet sein.

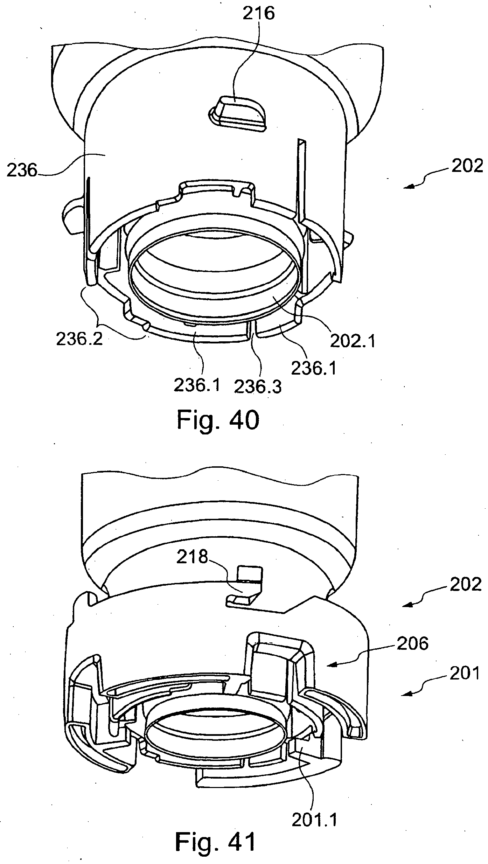

Die Figuren 40 bis 45 zeigen eine weitere, mit dem Nummernkreis 200 bezeichnete Ausführungsform einer nicht erfindungsgemäßen axial kodierten Tank-Filter-Anschlussstruktur 201 und 202, hier in der Kombination mit einer Axialdichtung 202.1. Auch hier sind gleiche Merkmale wie bereits beschrieben mit der gleichen Grundnummerierung versehen. Die Axialdichtung 201.1 ist in der Form einer kreisrunden elastisch verformbaren Dichtlippe mit einer gewissen axialen Längserstreckung ausgebildet, um insbesondere in vorteilhafterweise auch gewisse axiale Einsatztoleranzen sicher und zuverlässig dichtend ausgleichen zu können.

Auch hier finden sich axial ausgerichtete Kodierstrukturen als axiale Vorstände 236.1 des Filtergehäuses 236 und axiale Ausnehmungen 236.2, entsprechend der zuvor beschriebenen Ausführungsform mit dem Nummernkreis 100. Zusätzlich finden sich hier weitere axial ausgerichtete Kodierstrukturen 236.3 als Schlitze im stirnseitigem Gehäusevorstand 236.1 ausgebildet, die sowohl zur nicht erfindungsgemäßen Kodierung als auch gegebenenfalls für den Zulauf von Frischwasser in den Innenbereich des filterseitigen Anschlusssockels dienen können.

Den nicht erfindungsgemäßen axialen Kodierungsstrukturen 236.2 und 236.3 sind im tankseitigen Filteranschlusssockel 201 komplementär geformte, nicht erfindungsgemäße axiale Anschlusskodierstrukturen in der Form von axial vom Tankboden vorstehenden Vorsprüngen 201.1 zugeordnet, wie das in der Figur 41 dargestellt ist. Grundsätzlich könnte diese Ausführungsform die Umkehrung der Kodierstruktur der zum Nummernkreis 100 beschrieben Ausführungsform darstellen. Beide Ausführungsformen stellen aber nur mögliche Beispiele dar und können durchaus abgewandelt und/oder durch weitere Kodierstrukturen und Dichtungsvarianten ergänzt und/oder ersetzt werden.

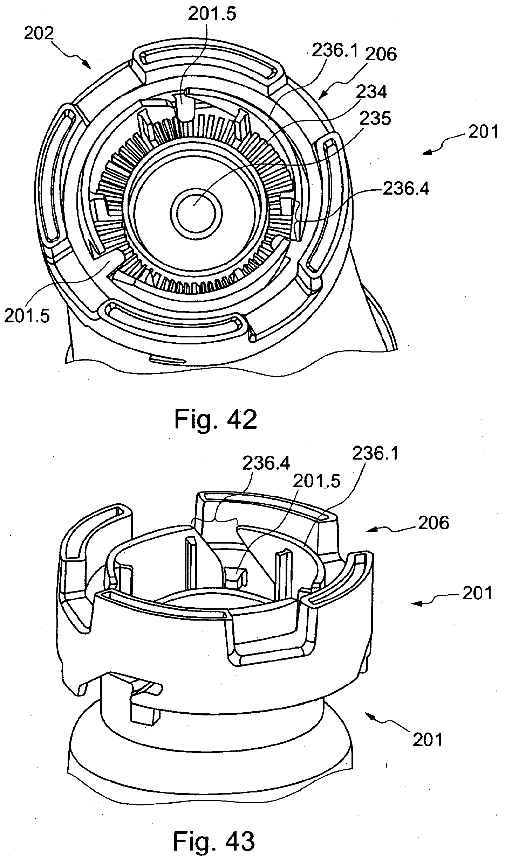

Die Figur 42 zeigt eine Unteransicht auf einen tankseitigen Filteranschluss 201 und einen darin eingesetzten, filterseitigen Tankanschluss 202 mit einer leicht veränderten nicht erfindungsgemäßen axial kodierten Anschlussstruktur 236.4 und 201.5 gegenüber der oben beschriebenen axial kodierten Anschlussstruktur 236.1, 236.2, 236.3 und 201.1. Die filterseitige Ausnehmung 236.4 ist hier in der Form eines schräg verlaufenden und stirnseitig am Filtergehäuse 236 mündenden Schlitzes ausgebildet, der zur Aufnahme eines radial vom tankseitig Filteranschlusselements 201 nach innen weisenden, nasenförmigen Kodierelementes 201.5 geeignet ist. Der schräge Verlauf des Schlitzes 236.4 berücksichtigt hierbei eine axiale Einsatzbewegung die zur Fixierung der Filterpatrone 231 mit einer abschließenden Drehbewegung fixiert werden soll Figur 43. Eine Filterpatrone ohne eine entsprechend axial ausgerichtete, schlitzförmige Ausnehmung 236.4 kann in einen so kodierten tankseitigen Filteranschlusssockel 201 nicht eingesetzt werden. Auch bei dieser Ausführungsform ist lediglich beispielhaft eine Dreipunktkodierung in einer bevorzugt 120° versetzten Positionierung vorgesehen, die aber nicht zwingend ist und durchaus durch andere Positionierungen ergänzt und/oder abgeändert werden kann.

Die Kodierstrukturen 216 und 236.2 bilden im Weiteren gemeinsam beispielhaft eine nicht erfindungsgemäße Doppel- bzw. Mehrfach-Bajonettstruktur aus. Hier in der Kombination einer axial und einer radial ausgerichteten, nicht erfindungsgemäßen Kodier- und/oder Fixierstruktur.

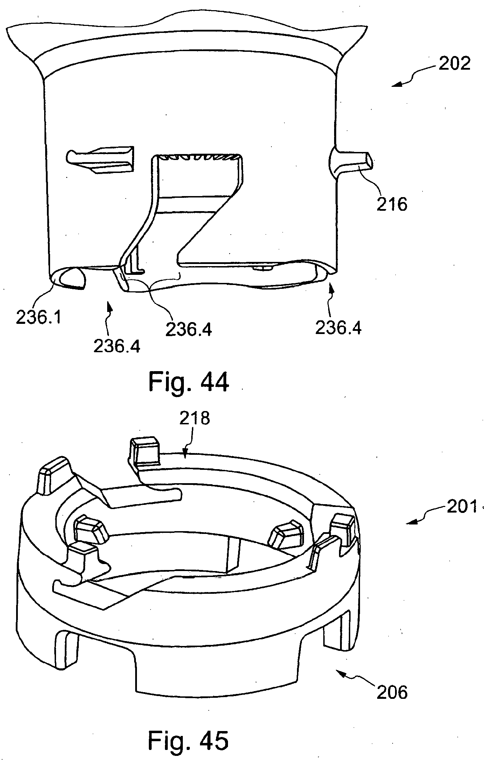

Die Figuren 44 und 45 zeigen die beiden oben beschriebenen Elemente und deren wesentliche Merkmale jeweils in separater Darstellung.

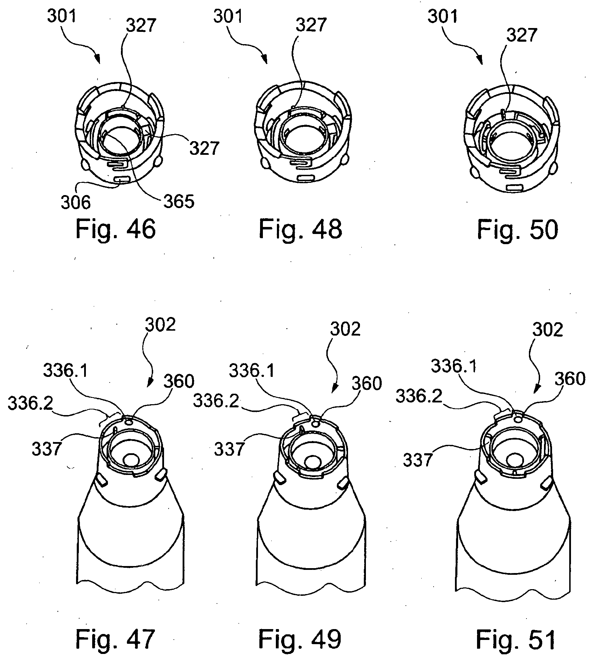

Die Figuren 46 bis 51 zeigen weitere, nicht erfindungsgemäße Ausführungsformen von tankseitigen Filterausschlusselementen und filterseitigen Tankanschlusselementen, die mit Verschnittstrukturen 306, 336.1 und 365 einer Verschnittvorrichtung im Sinne obiger Ausführungen zu den Nummernkreisen 0 bis 99 und 100 aufwärts im Wesentlichen bereits beschrieben sind. Dementsprechend sind der Einfachheit halber auch hier, bereits zu den zuvor beschriebenen Ausführungsformen beschriebene Merkmale mit der gleichen Grundnummerierung bezeichnet, aber um die Nummer 300 erhöht. Auch sie weisen, nicht erfindungsgemäße axial kodierte Anschlussstrukturen auf, bei denen beispielhaft über den Umfang betrachtet axiale Kodierstrukturen 336.1, 336.2 und 337 für die jeweils dargestellten, filterseitigen Tankanschlüsse ausgebildet sind, die zur Unterscheidung untereinander jeweils in unterschiedlichen Winkelpositionen zueinander angeordnet sind. Die tankseitigen Filteranschlüsse 301 zeigen die komplementären axial kodierten Anschlussstrukturen der jeweils zugehörigen tankseitigen Filteranschlusselemente als weitere mögliche Ausführungsformen unterschiedlicher Kodierstrukturen.

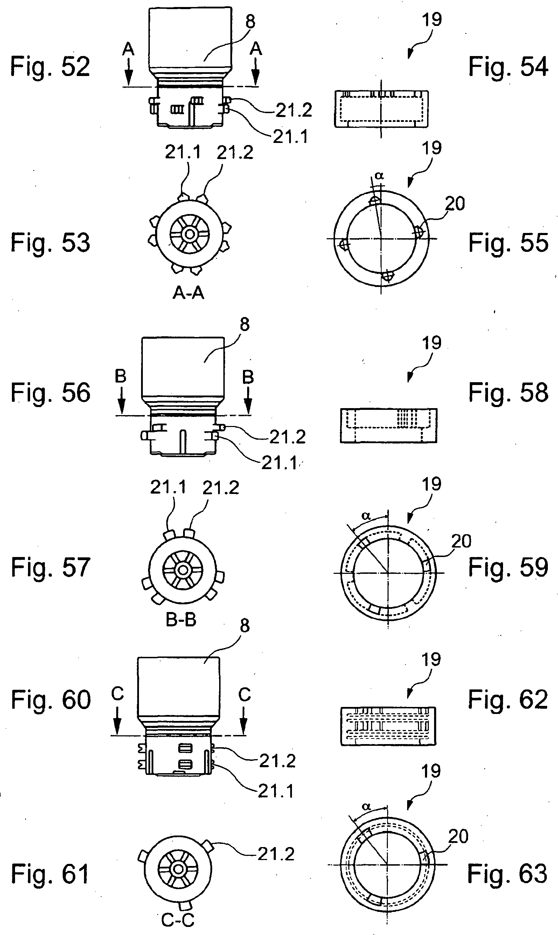

Die Figuren 52 bis 63 zeigen weitere mögliche, nicht erfindungsgemäße Ausführungsformen von Verschlüsselungs- und/oder Fixierungsstrukturen für Tank-Filter-Anschlusselemente.

Hierbei zeigen die Figuren 52 bis 55 eine erste, die Figuren 56 bis 59 eine zweite und die Figuren 60 bis 63 eine dritte mögliche, nicht erfindungsgemäße Ausführungsform von Bajonettverbindungen, insbesondere Doppel- bzw. Mehrfach-Bajonettverbindungen als Ergänzung zu den bereits in den Figuren 4 bis 10 dargelegten Ausführungsformen.

Der Schwerpunkt bei den Ausführungsformen der Figuren 52 bis 63 liegen dabei in der Darstellung unterschiedlich möglicher, nicht erfindungsgemäßer Kodierungen in der Form von Doppel- bzw. Mehrfach-Bajonettverbindungen bzw. Schlüsselkodierungen in der Form von Schlüsselschlossfunktionen. Die Figuren 52 und 53 zeigen die, nicht erfindungsgemäße filterseitige Tankanschlusskodier- bzw. Fixierstruktur mit in Draufsicht entsprechender Figur 53 acht Vorsprüngen 21.1 und 21.2, die entsprechend der Figur 52 entlang der Längserstreckung des filterseitigen Tankanschlusselementes sowohl axial als auch in einer radialen Winkelstellung zueinander versetzt als zwei Viererpaare ausgebildet sind.

Die komplementären Anschluss- bzw. Kodierstrukturen 20 sind im tankseitigen Filteranschlusselement 19 in den Figuren 54 und 55 gezeigt. In dieser Ausführungsform ist entsprechend der Figur 55 ein Winkel α zwischen einer Achse eines eingezeichneten x-y-Koordinatensystems und einer durch die Öffnung 20 verlaufenden Achse als vergleichsweise spitzer Winkel α dargestellt. Um eine Fixierung des filterseitigen Tankanschlusselementes 8 am tankseitigen Filteranschlusselement 19 zu ermöglichen, müssen die stirnseitig zu vorderst angeordneten Kodiervorsprünge 21.1 entsprechend der umlaufenden Verteilung der Öffnungen 20 am tankseitigen Filteranschlusselement 19 verteilt angeordnet sein, so dass überhaupt ein axiales Einschieben des filterseitigen Tankanschlusselementes ermöglicht wird. Nach Überwindung der ersten Einschubtiefe bezüglich der nicht erfindungsgemäßen Kodiervorsprünge 21.1 muss eine Drehung um eine durch das filterseitige Tankanschlusselement verlaufende Längsachse erfolgen, soweit bis der zweite Satz nicht erfindungsgemäßer Kodiervorsprünge 21.2 in Übereinstimmung mit den Öffnungen 20 kommt und eine weitere axiale Einführung des filterseitigen Tankelementes in das tankseitige Filterelement ermöglicht, bis zu einer Fixierung nach einer weiter folgenden Drehbewegung um die Längsachse durch das filterseitige Tankanschlusselement.

Die Figuren 56 bis 63 stellen ähnliche, nicht erfindungsgemäße Ausführungsformen dar, jedoch mit gegenüber den Ausführungsformen 52 bis 55 abgewandelten Konturen der Öffnungen 20 und der hierzu komplementären, nicht erfindungsgemäße Kodiervorsprünge 21 sowie auch hinsichtlich axial und in Draufsicht betrachtet winkelig abgeänderter Ausrichtungen.

Ein weiterer Unterschied liegt auch in der Anzahl der jeweiligen Kodierstrukturen. In den Ausführungsformen 52 bis 55 sind es insgesamt acht auf zwei Ebenen und in den Ausführungsformen 56 bis 63 jeweils nur sechs als zwei dreifachkodierte Vorsprungsebenen. Auch diese hier beschriebenen, nicht erfindungsgemäße Kodierstrukturen können ohne weiteres mit anderen z.B. axial ausgerichteten Kodierstrukturen kombiniert werden, um noch weitere Unterscheidungsmöglichkeiten für einzelne Tank-Filter-Anschlussverbindungen zu ermöglichen.

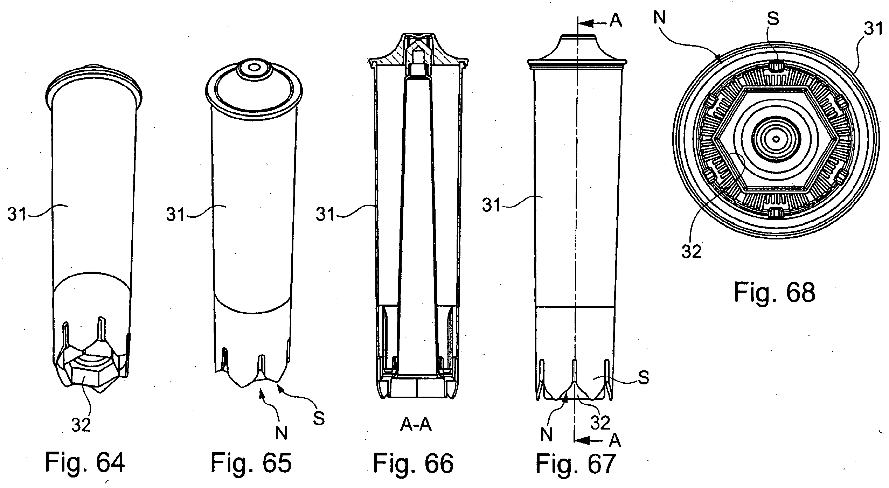

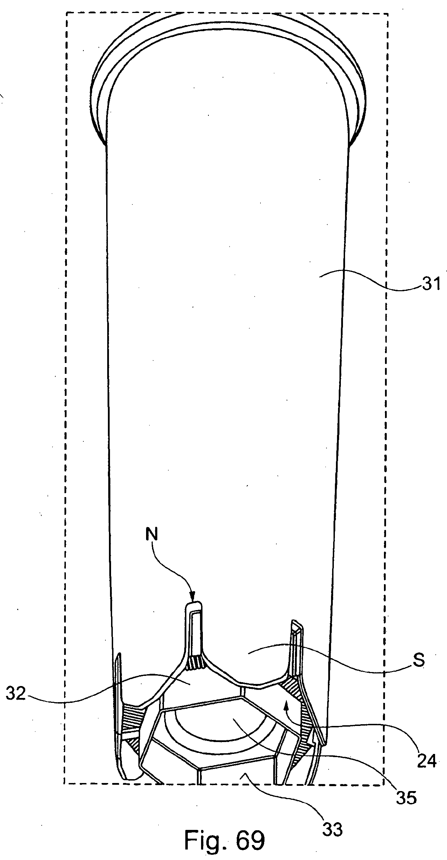

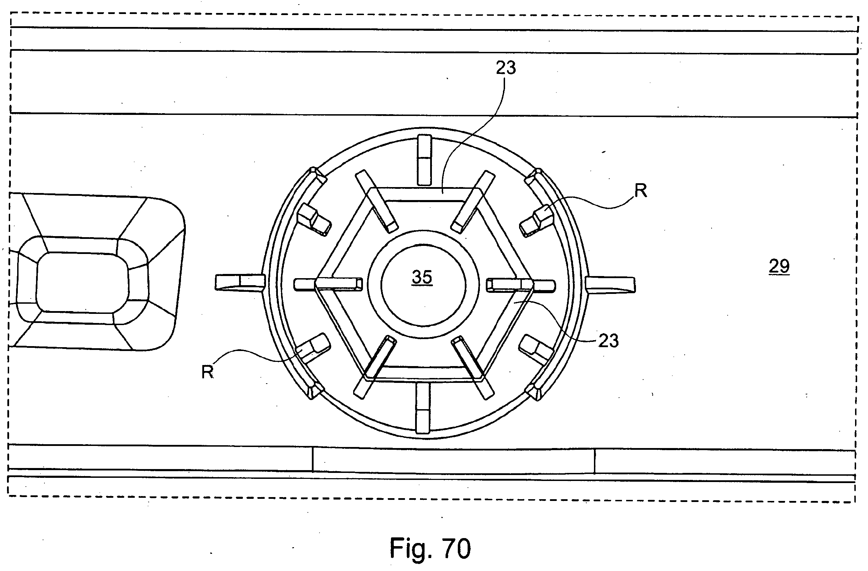

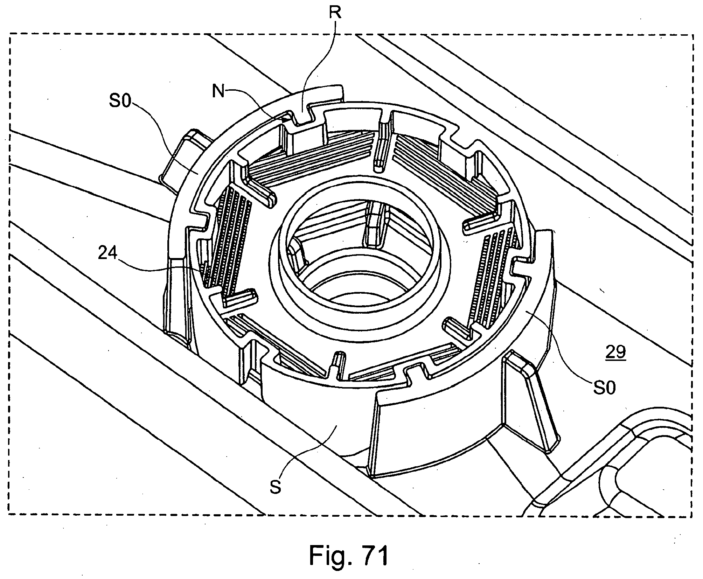

Die Figuren 64 bis 71 zeigen eine weitere Ausführungsform einer Tank-Filter-Anschlussverbindung in unterschiedlichen Ansichten und Darstellungen wie schräge Draufsichten, Schnittdarstellungen, Frontansicht und Unteransicht der Filterpatrone 29 sowie eine Draufsicht auf das tankseitige Filter-Anschlusselement mit und ohne eingefügtes filterseitiges Tank-Anschlusselement (Fig. 70 und 71).

Die wesentlichen Merkmale der Ausführungsform einer Tank-Filter-Anschlussverbindung sind die stirnseitig von der Filterpatrone 31 vorstehenden, etwa keilförmigen Spitzen S und die zwischen ihnen angeordneten Nuten N. Die geometrischen Abmessungen und Winkelstellungen dieser Spitzen S und Nutzen N zueinander ermöglichen wiederum unterschiedliche Kodierungen bzw. Fixierpunkte für das filterseitige Anschlusselement am tankseitigen Filteranschlusselement.

Die Spitzen können auch der Positionierung beim Einsetzen der Filterpatrone in den Tankanschlussstutzen dienen, insbesondere bei optisch nicht einsehbaren Anschlüssen, z.B. zur Vermeidung einer Beschädigung der Dicht- und/oder anderer Strukturen.

Insbesondere geeignet für eine Kodierung sind hierbei die Schlitzabstände und/oder die Schlitzbreiten und/oder die Breiten der Spitzen bzw. vorstehenden Flügel sowie ebenfalls deren Längen und/oder Abstände, die zu entsprechenden Strukturen am tankseitigen Filteranschlusselement korrespondieren müssen, um den Einsatz einer betriebsgemäß zugelassenen Filterpatrone zu ermöglichen.

Bei diesen korrespondierenden Kodier- und/oder Fixierstrukturen handelt es sich um am tankseitigen Filteranschlusselement ausgebildete Rippen R (Figur 70), deren Zusammenwirken mit den am filterseitigen Tankanschlusselement ausgebildeten Kodier- und/oder Fixierstrukturen N und S am besten in der Figur 71 erkennbar sind. Die Rippen R sind hierbei an einem das filterseitige Tankanschlusselement teilweise umschließenden, wandförmigen Sockel SO ausgebildet.

Die oben beschriebene Kodier- und/oder Fixierstruktur kann in einer davon abgewandelten Ausführungsform auch komplementär ausgebildet sein, also Nuten anstelle von Rippen und Rippen anstelle von Nuten. In einer weiter abgewandelten Ausführungsform ist durchaus aber auch eine gemischte oder kombinierte Kodier- und/oder Fixierstruktur durch Ausbilden von Nuten und Rippen an dem einen und/oder anderen tank- bzw. filterseitigen Anschlusselementes möglich.

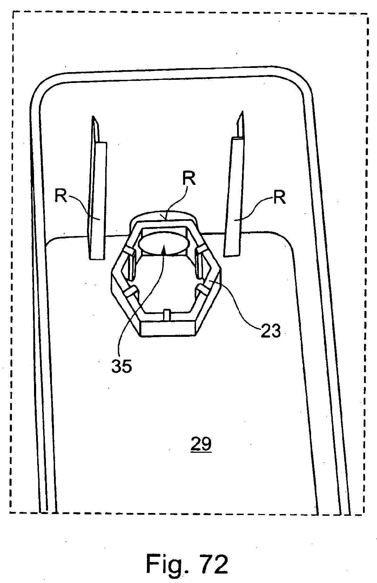

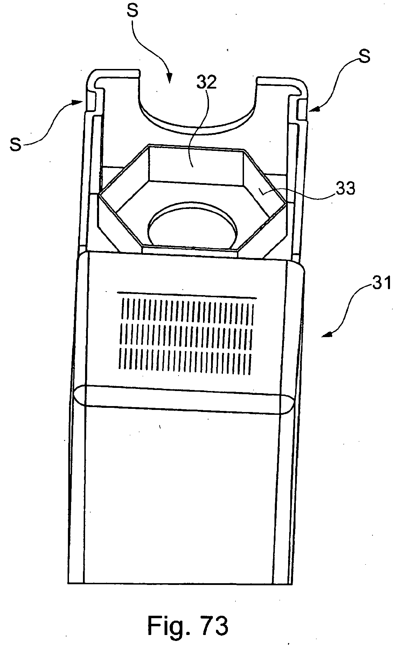

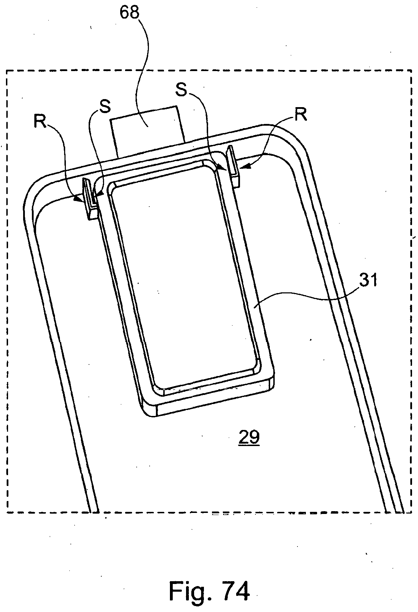

Die Figuren 72 bis 74 stellen eine weitere Ausführungsform dar, bei der der Filter 31 entlang an einer Tankwand angeordneten, zwei winkelig ausgebildete Rippen R aufweisenden und in zwei komplementäre Schlitze S eingreifenden Führung in das Innere des Tanks eingeschoben wird. Der Tank weist in seinem Boden 29 ein polygonförmiges, hier sechskantiges, Filteranschlusselement 23 und eine von innerhalb dieses Anschlusselementes durch die Tankwand nach außen führende Tankablauföffnung 35 auf.

Um einerseits eine ausreichende Wasserabfuhr durch diese wandseitig ausgebildete Tankablauföffnung 35 zu ermöglichen und andererseits eine möglichst vollständige Entleerung des Tanks, ist das polygonförmige Anschlusselement 23 als am Tankboden mit an seiner Oberseite abgeschrägten Polygon ausgebildet. Das filterseitige Tankanschlusselement 32 in der Form einer konisch ausgebildeten, ebenfalls polygonförmigen Formdichtung 32 weist eine entsprechend komplementär geneigte Anschlussfläche auf. Hierdurch kann die Filterpatrone 31 geführt und fixiert durch die Rippen R und komplementären Schlitze S senkrecht an der Tankwand nach unten in das Innere des Tanks eingeführt und formschlüssig und dichtend durch die so ausgebildete Kodierstruktur mit dem Tankboden zur Filterung des im Tank befindlichen Wassers eingesetzt werden.

Vorzugsweise kann auch bei dieser Ausführungsform, wie im Übrigen bei allen anderen Ausführungsformen auch, eine hier nicht dargestellte Bypassstruktur ausgebildet sein, um ein Verschneiden des gefilterten Wassers zu ermöglichen. Eine ergänzende rippenförmige Struktur R und eine komplementäre, schlitzförmige Kodierstruktur S ist hier durch die stirnseitige Ausnehmung S in der Filterwand und die komplementäre Form R der Auslassöffnung 35 im Bodenbereich der Tankwand ausgebildet. Auch diese können entsprechend abgeändert werden, z.B. nicht erfindungsgemäß in eine Vierkantform, eine Drpikantform oder andere sowie um weitere Ausnehmungen und/oder Vorsprünge aufweisende Struktur, zur Unterscheidung unterschiedlich zugelassener Filtertypen.

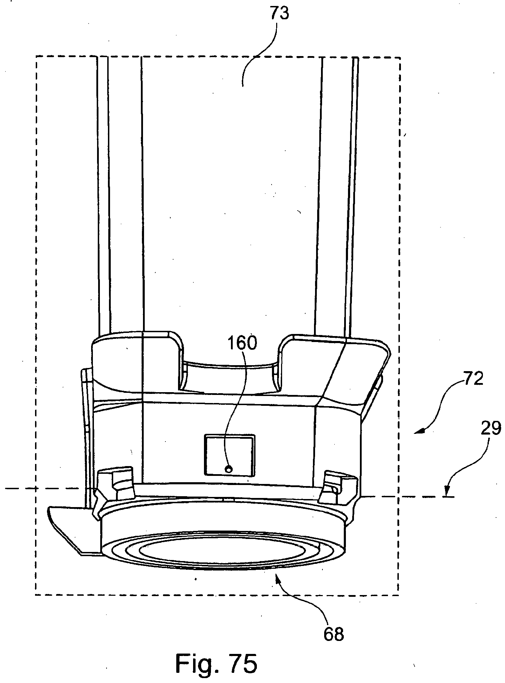

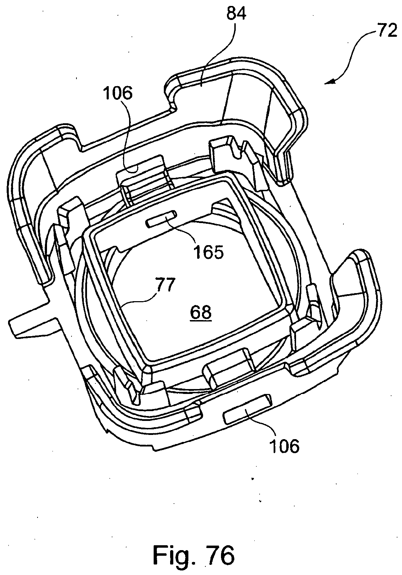

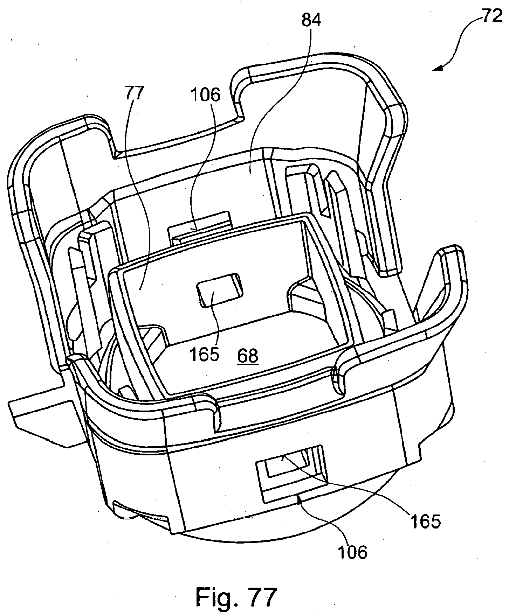

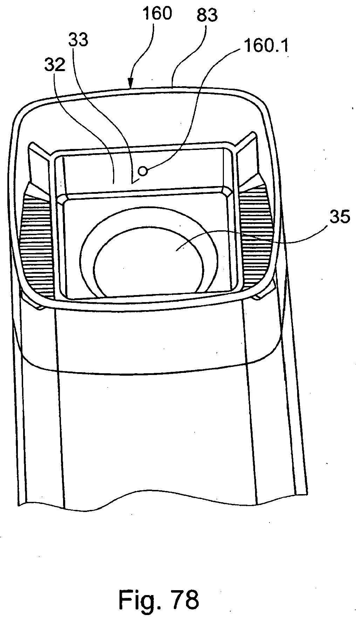

Eine weitere Ausführungsform einer nicht erfindungsgemäßen Vierkant-Kodierung für einen Tank-Filter-Anschluss sind durch die Figuren 75 bis 78 dargestellt. Diese Ausführungsform weist zusätzlich zu den in den Figuren 20 bis 31 dargestellten Ausführungsformen eine Bypassstruktur auf. Diese Bypassstruktur umfasst in Anlehnung an die in den Figuren 32 bis 39 dargestellte Bypassstruktur in der stirnseitigen Gehäuseverlängerung der Filterpatrone 73 eine Öffnung in der Form einer Bohrung 160 auf, die in Überdeckung mit einer in einem tankseitigen Filtersockel-Anschlusselement 77 ausgebildeten Öffnung 165 den Durchfluss von im Tank befindlichen Rohwasser hin zum tankseitigen Geräteanschluss im Ablaufbereich des Tanks zur Beimischung zu dem durch die Filterpatrone gefilterten Wasser ermöglicht. Hierbei ist filterseitig die Bypassöffnung 160 in der stirnseitigen Verlängerung des Filters ausgebildet und realisiert eine Verschnittvorrichtung in Kombination mit dem tankseitigen Filteranschlusselement 77.

Eine weitere Möglichkeit zur Realisierung einer Verschnittvorrichtung könnte durch die Anordnung dieser Bypassöffnung 160 gegenüber einer in der Außenschale 84 ausgebildeten Öffnung 106 erreicht werden, wobei dann gegebenenfalls im Inneren der Filterpatrone und/oder im Inneren des tankseitigen Anschlusselementes eine entsprechende Kanalführung ausgebildet sein muss, um das so freigegebene Verschnittwasser dem durch die Filterpatrone aus deren Ausflussöffnung 35 ausfließenden, gefilterten Wassers beizumengen.

Eine weitere Verschnittstruktur kann durch die Ausbildung einer Bypassöffnung 160.1 im polygonförmigen, filterseitigen Tankanschlusselement 32, hier in der Form einer vierkantigen Formdichtung 32, realisiert werden, welche wiederum mit der im tankseitigen Filteranschluss 77 ausgebildeten Öffnung 165 korrespondiert. Die Größe der Öffnung 161.1 bestimmt hierbei wiederum die Verschnittmenge. In dieser Ausführungsform ist die Verschnittvorrichtung direkt im Dichtbereich des polygonförmig ausgebildeten Tank-Filter-Anschlusses realisiert.

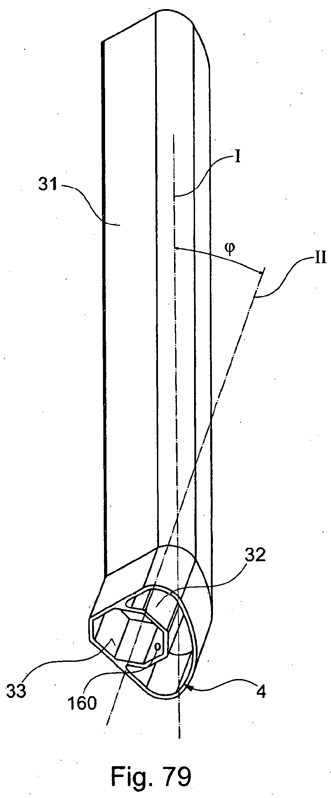

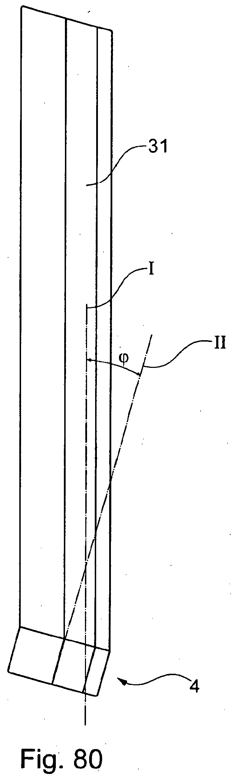

Die Figuren 79 und 80 zeigen eine Ausführungsform eines Tank-Filter-Anschlusses, bei dem eine durch das filterseitige Tankanschlusselement 4 verlaufende Längsachse II gegenüber einer durch das Gehäuse der Filterpatrone 31 verlaufenden Längsachse I schiefwinkelig ausgerichtet ist, hier vorzugsweise in einem spitzen Winkel ϕ. Diese schiefwinkelige oder auch gekröpfte oder auch abgeschrägte Ausrichtung des filterseitigen Tankanschlusselementes 4 gegenüber dem übrigen Filtergehäuse bildet eine weitere Form einer mechanischen Kodierung aus, die mit weiteren, bereits oben beschriebenen, Kodierungsformen kombinierbar ist, insbesondere mit einem hier dargestellten, polygonförmigen Anschlusselement in der Form eines nicht erfindungsgemäßen Achtkantes. Dieser Achtkant kann bevorzugt ebenfalls als Formdichtung ausgebildet sein und, wie hier dargestellt, eine Bypass- bzw. Verschnittvorrichtung in der Form einer Öffnung 160 aufweisen, die bei Vorhandensein eines komplementären Elementes im tankseitigen Filteranschlusselement einen entsprechenden Verschnitt des zu filternden Wassers ermöglicht.

Die Figur 79 zeigt die Filterpatrone 31 in einer schrägen Ansicht von unten, bei der das filterseitige Anschlusselement 4 und dessen wesentliche Merkmale zu erkennen sind. Demgegenüber zeigt die Figur 80 eine Seitenansicht, bei der die Abwinkelung zwischen dem Patronengehäuse 31 und dem filterseitigen Tankanschluss 4 für einen beispielhaft dargestellten Winkel gezeigt ist.

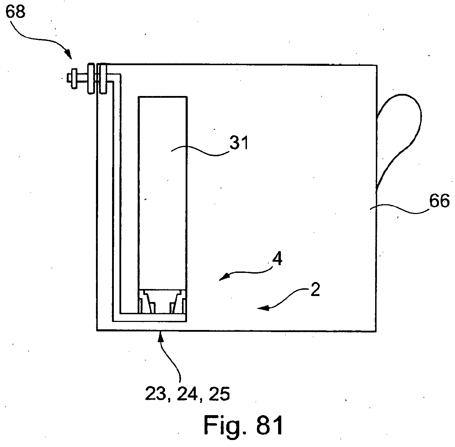

Die Figur 81 zeigt eine weitere Ausführungsform, bei der der Tank 66 wiederum als Einschubtank ausgebildet ist, in welchem eine Patrone 31 zur Filterung des darin enthaltenen Wassers an einem tankseitigem Filteranschlusselement 2 angeschlossen ist. Dieses tankseitige Anschlusselement 2 ist über eine Leitung, hier vorzugsweise in der Form eines stabilen Rohres, mit dem tankseitigen Geräteanschluss 68 verbunden. Dieser tankseitige Geräteanschluss 68 ist vom betriebsgemäßen bodenseitigen Bereich des Tankes 66 beabstandet vom Tankinneren nach außen geführt. In dieser Ausführungsform ist der Geräteanschluss 68 beispielhaft in einer in der Oberkante einer Tankwand eingelassenen Aufnehmung fixiert, die in vorteilhafter Weise als lösbare Verbindung ausgebildet sein kann, so dass ein einfaches Entnehmen und Reinigen ermöglicht wird.

Der Betrieb des Tankes ist durch einfaches Einschieben in eine entsprechend ausgebildete Aufnahme eines Gerätes möglich, bzw. dessen Befüllen mit frischem, anschließend durch den Filter 31 zu filterndes Wasser durch Herausziehen. Das tankseitige Filteranschlusselement 2 kann hierbei alle oben beschriebenen Kodierungs- und/oder Fixierungs- und/oder Dichtungsmerkmale aufweisen, so dass auch in dieser Schubladen-Ausführungsform zuverlässig die Verwendung einer nicht betriebsgemäß vorgesehenen Filterpatrone ausgeschlossen werden kann, was im Übrigen auch für die Ausführung nach den Figuren 72 bis 74 gilt.

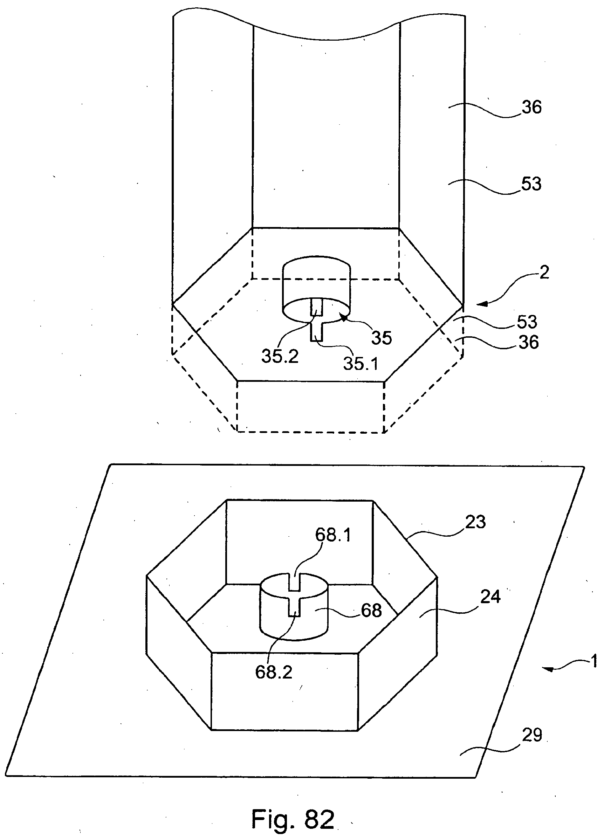

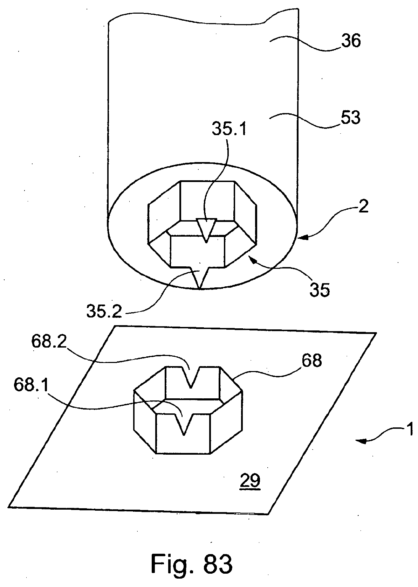

Zwei weitere mögliche Ausführungsformen von Kodierungen des Anschlusses zwischen Tank und Filter werden anhand der Figuren 82 und 83 dargestellt und beschrieben. Bei der Figur 82 weist das Gehäuse der Filterpatrone 53 selbst eine polygone Außenkontur in der Form eines Sechskantes auf, der nicht erfindungsgemäß in eine komplementäre, tankseitige polygone Kodier- und/oder Fixierstruktur 23 einsetzbar ist. Die fest durchgezogenen Linien zeigen die Filterpatrone 53 in einer Ansicht von schräg unten mit einem im Grunde ebenen Boden in dessen Mitte der Filterauslass 35 für das filtrierte Wasser beispielhaft als zylinderförmig vorstehendes Rohr mit zwei stirnseitigen axial vorstehenden Ansätzen 35.1 und 35.2 ausgebildet ist. Dieses zylindrisch vorstehende Auslasselement 35 ist durch die beiden axial vorstehenden Flügel kodiert und bildet mit seiner Stirnseite gegenüber der Stirnseite eines komplementären im tankseitigen Filteranschluss ausgebildeten Auslass- und Aufnahmeelementes 68 mit seinen bei den Kodiernuten 68.1 und 68.2 eine axiale Kodier- und/oder Dichtstruktur bzw. - kontur. Die Filterpatrone 53 kann nur dann funktionstüchtig in das tankseitige Filteranschlusselement 1 eingesteckt werden, wenn die Stirnseite des Filterauslasses 35 dichtend mit der Stirnseite des tankseitigen Geräteauslasses 68 zusammenpasst.

Die hier beispielhaft dargestellte, sechskantige Außenkontur der Filterpatrone 53 kann in der mit den durchgezogenen Linien dargestellten Ausführungsform in den Anschlusssockel 23 des tankseitigen Filteranschlusselementes 1 nicht erfindungsgemäße fixierend und gegebenenfalls auch dichtend eingesteckt werden. Hierbei dient der Innenumfang des Anschlusssockels 23 zur Fixierung und gegebenenfalls zur Dichtung gegenüber dem Außenumfang bzw. gegenüber deren Anschluss.

Um eine weitere Befestigungsmöglichkeit zwischen der hier beispielhaft als Sechskant dargestellten, polygonförmigen Außenkontur der Filterpatrone 53 und einem entsprechend komplementären tankseitigen Anschlusssockel 1 aufzuzeigen ist das Gehäuse 36 der Filterpatrone 53 durch die gestrichelten Linien als gegenüber dem zuvor beschriebenen Filterboden verlängert dargestellt. Dieser polygonförmige, gegenüber dem Boden der Filterpatrone vorstehende Anschlussring kann zur Fixierung der Filterpatrone über den tankseitigen Filteranschlussstutzen 23, wiederum fixierend und vorzugsweise dichtend je nach Ausführung, soweit übergestülpt oder nicht erfindungsgemäß ebenfalls eingesteckt werden, bis die beiden Innenkodierungen, des Filterauslasses 35 und des Tankauslasses 68, dichtend aneinander anstehen bzw. deren hier beispielhaft gezeigten flügelartigen und komplementären schlitzartigen Kodierstrukturen dichtend aneinander anstehen bzw. ineinander greifen. Zur Wasserführung vom Tank ins Innere der Filterpatrone sind entsprechende Öffnungen und/oder Kanäle vorgesehen, die hier jedoch nicht gezeigt sind. Ebenfalls vorgesehen und nicht gezeigt können entsprechende Bypassstrukturen sein, wie sie bereits oben ausführlich beschrieben sind. Die Figur 82 zeigt somit sowohl eine Fixierung der Filterpatrone am nicht erfindungsgemäßen Innenumfang des tankseitigen Filteranschlusselementes 23 als auch an dessen Außenumfang 24.

Die Figur 83 zeigt demgegenüber eine dahingehend abgewandelte, nicht erfindungsgemäße Ausführungsform, dass das Gehäuse 36 der Filterpatrone beispielhaft rund dargestellt ist und der Filterauslass 35 als polygone Struktur, hier wiederum beispielhaft als Sechskant, der zusätzlich wieder eine stirnseitige Kodierung in der Form zweier axial vorstehender, kodierender, dreieckiger Spitzen oder Flügeln aufweist. Auch hier kann die Filterpatrone nur dann funktionstüchtig mit dem tankseitigen Filteranschlusselement 1 verbunden werden, wenn die beiden Auslassstrukturen 35 und 68 nicht erfindungsgemäß stirnseitig axial dichtend aneinander angefügt werden können. Von der Darstellung weiterer Kodierungs- und/oder Fixierungsstrukturen wurde aus Gründen der Übersichtlichkeit abgesehen. Es können jedoch nicht erfindungsgemäß alle bereits oben beschriebenen Strukturen auch hier entsprechend vorgesehen werden. Auch für die beiden Ausführungsformen entsprechend der Figuren 82 und 83 gilt, dass nicht erfindungsgemäß auch diese Kodierungsstrukturen zwischen Filterseite und Tankseite vertauscht und/oder abgeändert und/oder durch weitere Konturen und/oder Strukturen ergänzt werden können.

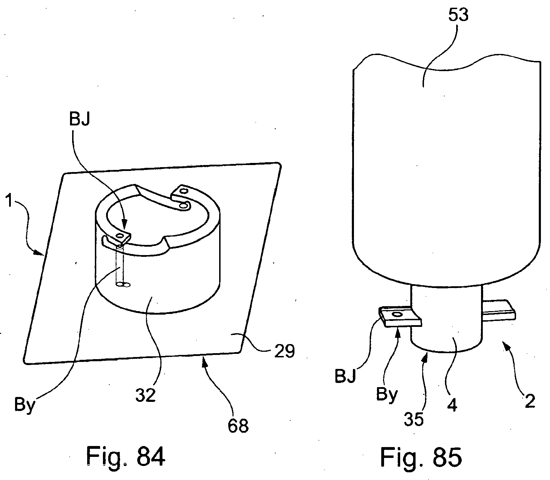

Zwei weitere Ausführungsmöglichkeiten bezüglich einer Bypasskonfiguration zwischen einem tankseitigen Filteranschlusselement 1 und einem filterseitigen Tankanschlusselement 2 sind in den Figuren 84 bis 87 dargestellt. Die Figuren 84 und 85 zeigen hier beispielhaft und schematisch eine Bypassanordnung BY, die einen Verschnitt zwischen durch die Filterpatrone 53 gefiltertem Wasser und einem nicht oder anderweitig gefiltertem oder aufbereitetem Wasser ermöglicht. Die Bypass- oder Verschnittstrecke BY ist in dieser Ausführungsform, nicht erfindungsgemäß, mit einem Bajonettverschluss BJ derart kombiniert, dass in einem Bajonettflügel BJ eine Öffnung BY vorgesehen ist, die mit einer weiteren, an einem zum Bajonettflügel komplementären Bajonettschlitz BJ angeordneten weiteren Bypassöffnung BY derart korrespondiert, dass, nicht erfindungsgemäß, bei betriebsgemäß eingesetzter Filterpatrone eine entsprechende Bypassführung realisiert wird. In der hier dargestellten Ausführungsform ist die im tankseitigen Filteranschlusselement 1 gezeigte Bypassöffnung BY vom stirnseitigen Anschlussbereich des tankseitigen Anschlusssockels bis unterhalb der Stelle geführt, in welcher der filterseitige Tankanschlussstutzen 4 in betriebsgemäß eingesetzter Position endet, so dass das am Filterbett der Filterpatrone 53 vorbeigeführten Bypasswasser mit dem durch das Filterbett der Filterpatrone 53 filtrierten Wasser vermischt und dem tankseitigen Geräteanschluss 68 zugeführt wird.

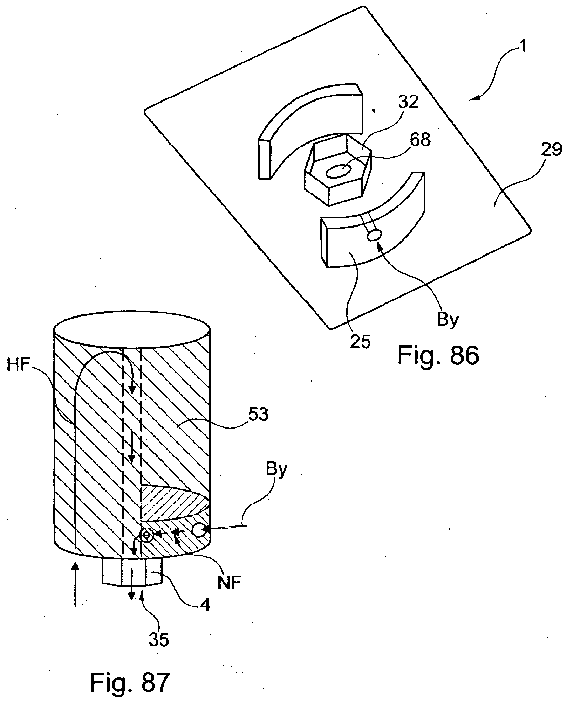

Die Figuren 86 und 87 zeigen eine demgegenüber abgewandelte Ausführungsform, dass die Bypassstrecke BY über eine von einem Hauptfilterbett HF der Filterpatrone 53 separate Aufbereitungs- und/oder Filterstrecke geführt wird, die hier beispielhaft und symbolisch als Nebenfilterstrecke NF dargestellt ist. Diese zweite Aufbereitungs- und/oder Filterstrecke NF kann z.B. eine Aktivkohlefilterstrecke und/oder andere Aufbereitungsmechanismen und/oder -medien enthalten. Nach Durchfließen dieser Nebenfilterstrecke NF wird das über diese Bypassstrecke BY geführte Wasser mit dem durch die Filterstrecke HF der Filterpatrone 53 filtrierte Wasser vermischt, so dass es ebenfalls durch den tankseitigen Geräteanschluss 68 entnommen werden kann.

In der in Figur 87 gezeigten Ausführungsform der Filterpatrone 53 ist die Zusammenführung der beiden separat über den Hauptfilter HF und über den Nebenfilter NF geführten bzw. aufbereiteten Wasserstrecken im Inneren der Filterpatrone 53 durch eine Einmündung in die innere Fallleitung der Filterpatrone 53 beispielhaft und schematisch dargestellt. In einer abgewandelten Ausführungsform kann durchaus aber ergänzend oder alternativ auch eine eigene Auslassöffnung aus der Filterpatrone heraus in Richtung zum tankseitigen Geräteanschluss 68 vorgesehen sein, wobei gegebenenfalls für alle drei Ausführungsformen gelten kann, dass sie alle innerhalb des tankseitigen Filteranschlussstutzens 32 münden, so dass, wiederum beispielhaft, eine Abdichtung durch einen Formschluss der beiden polygonförmigen Anschlusselemente des Tanks und des Filters möglich sind.

Die Einleitung des Bypassstroms in die Nebenfilterstrecke ist nur dann möglich, wenn die ebenfalls als Kodierung fungierende Öffnung BY an dem axial vom Tankboden 29 hoch stehenden Verschlüsselungselement 25 mit der entsprechenden filterseitigen Bypassöffnung BY im betriebsgemäß vorgesehenen Zustand eingesteckt ist. Ist keine Überdeckung dieser beiden Öffnungen gegeben, so kann kein entsprechender Verschnitt realisiert werden. Der tankseitige Filteranschluss 1 entsprechend der Figur 86 ist ebenfalls nur schematisch und beispielhaft dargestellt und kann mit unterschiedlichsten Varianten der oben bereits beschriebenen Kodier- und Anschlussstruktur versehen sein, so dass gegebenenfalls nur eine einzige von allen sechs hier möglichen Winkelausrichtungen für einen zulässigen Filterabschluss freigeschaltet ist. Von der Darstellung solcher Kodierstrukturen wurde an dieser Stelle aus Gründen der Übersichtlichkeit abgesehen.

Grundsätzlich gilt auch für diese Ausführungsformen in den Figuren 84 bis 87, dass auch sie mit allen oben beschriebenen Kodierungs- und/oder Fixierungs- und/oder Dichtstrukturen und/oder kombiniert werden können.

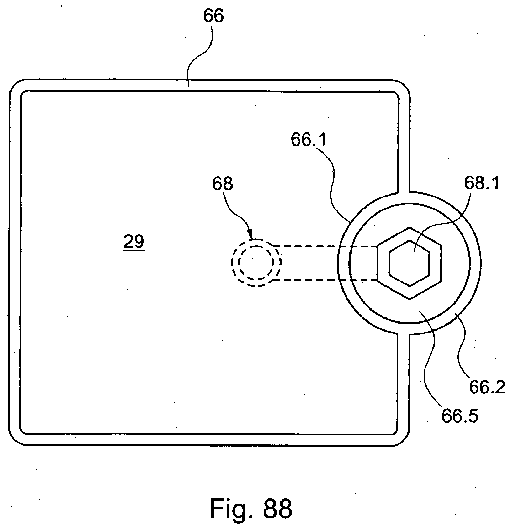

Die Figuren 88 bis 90 zeigen zwei weitere Ausführungsformen eines Tanks, bei denen die Filterpatrone außerhalb des Hauptgefäßes des Tanks 66 aber weiterhin, wie bisher beschrieben, zwischen dem tankseitigen Filteranschlusselement 1 und einem tankseitigem Geräteanschluss 68 angeordnet ist, um im Tank bevorratetes Rohwasser vor der Zufuhr an eine Entnahmestelle bzw. ein entsprechend angeschlossenes Gerät mit oder auch ohne Verschnitt zu filtern.

Die Figur 88 zeigt hierbei eine Draufsicht auf einen Tank 66, dessen Tankwand 66.1 zusammen mit einer weiteren Tankwand 66.2 ein Gehäuse 66.5 zur Aufnahme einer entsprechend geformten Filterpatrone 31 ausbildet und flüssigkeitsleitend mit dem Inneren des Tanks verbunden ist. Im Bodenbereich des Gehäuses 66.5 ist ein tankseitiges Filteranschlusselement 1 gezeigt, hier beispielhaft als kodierte Anschlussstruktur in der Form einer Polygonkontur. Im Inneren dieses tankseitigen Filteranschlusselementes 1 ist eine Abflussöffnung 68.1 zur Verbindung an das tankseitige Geräteanschlusselement 68 vorgesehen.

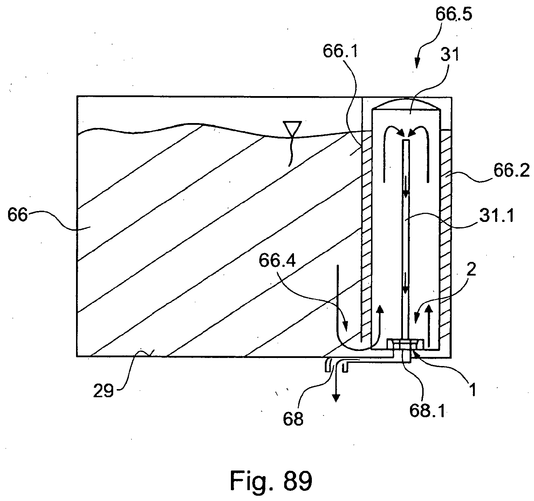

Die Figur 89 zeigt diesen Tank 66.in einer Schnittdarstellung quer durch das Filterpatronen-Aufnahmegehäuse 66.5 und die benachbarten Elemente des Tanks sowie die darunter ausgebildete Anschlussstruktur für das tankseitige Geräteanschlusselement 68. In dieser Ausführungsform könnte der Tank beispielsweise als Stecktank in ein entsprechend geeignet aufgebautes Geräte eingebaut werden. Die Zufuhr des im Inneren des Tanks 66 eingefüllten Wassers an die Filterpatrone 31 erfolgt durch eine Öffnung 66.4 in der Tankwand 66.2, die beispielsweise in der Form einer nicht vollständig bis zum Tankboden 29 reichenden Tankwand 66.1 ausgebildet sein kann. Das zu filternde Rohwasser steht somit im Inneren des durch die beiden Tankwande 66.1 und 66.2 gebildeten Filteraufnahme-Gehäuses 66.5 gleich hoch wie im Inneren des Wassertanks 66. Zur Darstellung des Filterstroms durch die Filterpatrone hindurch sind aus dem Inneren des Tanks 66 und von der Bodenseite der Filterpatrone 31 aufsteigend bis zur Oberkante einer hier beispielhaft als zentrales Abflussrohr gezeigten Abflussleitung, durch diese hindurch und abschließend aus dem tankseitigen Geräteanschluss 68 herausführend Fließpfeile eingezeichnet. Alle bisher in der Beschreibung oben dargelegten Merkmale hinsichtlich einer Kodierung und/oder einer Fixierung und/oder einer Dichtung und/oder die Verwendung eines Adapterstückes und/oder dergleichen mehr sind auch hier in vollem Umfang möglich bzw. gültig.

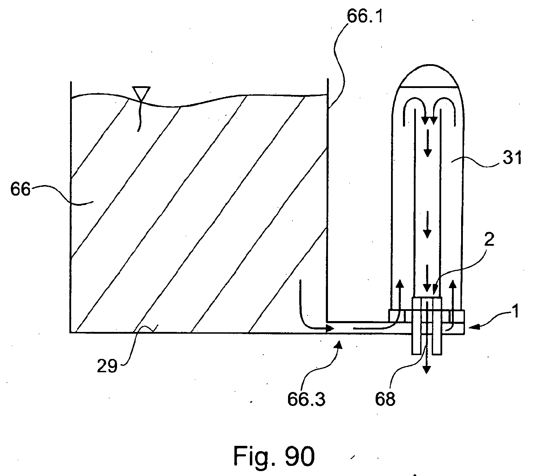

Die Figur 90 zeigt eine Ausführungsform, bei der die flüssigkeitsleitende Verbindung zwischen dem tankseitigen Filteranschlusselement 1 und dem filterseitigen Tankanschlusselement 2 nicht erfindungsgemäß vollkommen außerhalb des Tanks 66 erfolgt. Hierzu ist der Tankboden 29 beispielhaft an einer Stelle gegenüber einer Tankwand 66.1 nach außen vorgezogen weitergebildet und zu einer geschlossenen Flüssigkeitsleitung 66.3 geformt, durch welche das im Inneren des Tanks 66 befindliche Wasser zu dem in dieser beispielhaft dargestellten Ausführungsform außerhalb des Tanks 66 ausgebildeten tankseitigen Filteranschlusselement 1 fließt. An diesem tankseitigen Filteranschlusselement 1 ist die Filterpatrone 31 mit ihrem filterseitigen Tankanschlusselement 2 angeschlossen. Auch für diese Ausführungsform gilt, dass alle bereits oben beschriebenen Merkmale hinsichtlich einer Kodier- und/oder Dicht- und/oder Fixier- und/oder Adapterstruktur in jeglicher Ausführungsvariante vorgesehen werden können bzw. Gültigkeit haben.

### Bezugszeichenliste:

- 1: Anschlusssockel
- 2: Tankanschlusselement
- 3: Radialdichtung
- 4: Anschlussstutzen
- 5: Patronengehäuse
- 6: Seitenschlitz
- 7: Abflussrohr
- 8: Anschlusssockel
- 9: Tankanschlusselement
- 10: Anschlusstutzen
- 11: Patronengehäuse
- 12: Axialdichtung
- 13: Zwischenbereich
- 14: Abflussrohr
- 15: Aufnahme- und Führungsbahn
- 16: Vorsprung
- 17: Rastelement
- 18: Rastelement
- 19: Anschlusssockel
- 20: Öffnung
- 21: Kodiervorsprung
- 22: Kodierfeder
- 23: Anschlusssockel
- 24: Dichtfläche
- 25: Außenschale
- 26: Sperrelement
- 27: Bodenrippe
- 28: Bodenrippe
- 29: Tankboden
- 30: Innenrippe
- 31: Filterpatrone
- 32: Formdichtung
- 33: Dichtfläche
- 34: Eintrittsschlitz
- 35: Abflussöffnung
- 36: Filterpatronengehäuse
- 37: Schnappelement
- 38: Aufnahme
- 39: Unterkante
- 40: Anschlag
- 41: Bodenöffnung
- 42: Nuten
- 43: Schlüsselelement
- 44: Tankanschlussbereich
- 45: Boden
- 46: Axialdichtung
- 47: Trennlinie
- 48: Scheibe
- 49: Ringschulter
- 50: Ventilkörper
- 51: Feder
- 52: Tankboden
- 53: Filterpatrone
- 54: Anschlusssockel
- 55: Aussenfläche
- 56: Abflussleitung
- 57: Dichtung
- 58: Wand
- 59: Wand
- 60: Aussparung
- 61: Öffnung
- 62: Sockelwand
- 63: Sockelwand
- 64: Sockelwand
- 65: Bypassöffnung
- 66: Tank
- 67: Sauganschluss
- 68: Geräteanschluss
- 69: Längsachse
- 70: Zwischenraum
- 71: Rand
- 72: Anschlusselement
- 73: Patrone
- 74: Fuss
- 75: Einlauföffnung
- 76: Einlauföffnung
- 77: Anschlusssockel
- 78: Bodenplatte
- 79: Dichtfläche
- 80: Dichtfläche
- 81: Formdichtung
- 82: Auslauf
- 83: Außenwand
- 84: Außenschale
- 85: Adapter
- 86: Adapter
- 87: Axialer Vorsprung
- 88: Axialer Vorsprung
- 89: Axialer Vorsprung
- 90: Axialer Vorsprung
- 91: Axialer Vorsprung
- 92: Axialer Vorsprung
- 93: Axialer Vorsprung
- 94: Axialer Vorsprung
- 95: Axialer Vorsprung
- 96: Axiale Ausnehmung
- 97: Axiale Ausnehmung
- 98: Axiale Ausnehmung
- 99: Axialer Vorsprung

## Patentansprüche

1. Wassertank (66) mit Filterpatrone (31) für wasserführende Geräte, insbesondere Haushaltsgeräte, wie Getränkeautomaten, insbesondere Kaffeeautomaten, Trinkwasserspender, Koch- und Backgeräte, Dampfgeräte, insbesondere Dampfbügeleisen, Dampfreiniger, Hochdruckreiniger, Luftreiniger und - konditionierer oder dergleichen, wobei ein Sauganschluss am Tank zum Ansaugen von Wasser aus dem Wassertank mit Mitteln zur Erzeugung eines Unterdrucks und ein Filteranschluss zum Anschluss der Filterpatrone im Inneren des Wassertanks vorgesehen ist, **dadurch gekennzeichnet, dass** mechanische Kodierungsstrukturen am Filteranschluss des Wassertanks vorgesehen sind, um den Einsatz einer hierzu nicht korrespondierenden Filterpatrone auszuschließen, wobei ein tankseitiger Anschlusssockel (23) eine sechskantförmige Außenkontur aufweist, dessen umfangseitige Außenfläche eine Dichtfläche (24) bildet und wobei die eingesetzte Filterpatrone (31) mit einer Formdichtung (32) versehen ist, die ebenfalls einen Sechskantquerschnitt aufweist und deren Innenfläche eine Dichtfläche (33) bildet.

2. Wassertank und Filterpatrone nach Anspruch 1, **dadurch gekennzeichnet, dass** der Filteranschluss des Wassertanks und ein Anschlussstutzen der Filterpatrone einander umschließen.

3. Wassertank und Filterpatrone nach einem der vorgenannten Ansprüche, **dadurch gekennzeichnet, dass** eine Verschnitteinstellung zum Verschneiden gefilterter Flüssigkeit mit ungefilterter und/oder anderweitig filtrierter oder aufbereiteter Flüssigkeit vorgesehen ist.

4. Wassertank und Filterpatrone nach einem der vorgenannten Ansprüche, **dadurch gekennzeichnet, dass** eine winkelabhängige Verschnitteinstellung vorgesehen ist.

5. Wassertank und Filterpatrone nach Anspruch 3, **dadurch gekennzeichnet, dass** die Filterpatrone wenigstens ein Mitnehmerelement zur Betätigung einer tankseitigen Verschnittmengeneinstellung aufweist.

6. Wassertank und Filterpatrone nach einem der Ansprüche 3 bis 5, **dadurch gekennzeichnet, dass** eine für die Ansteuerung zweier oder mehrerer Filterstrecken ausgebildete Verschnitteinrichtung vorgesehen ist.

7. Wassertank und Filterpatrone nach einem der vorgenannten Ansprüche, **dadurch gekennzeichnet, dass** an das tankseitige Filteranschlusselement (1) ein Adapter (85) für den Anschluss der Filterpatrone (31) vorgesehen ist.

8. Wassertank und Filterpatrone nach einem der vorhergehenden Ansprüche, **dadurch gekennzeichnet, dass** an das tankseitige Geräteanschlusselement (68) ein Adapter (86) für den Anschluss an ein Gerät vorgesehen ist.

9. Gerät, insbesondere wasserführendes Haushaltsgerät oder Gerät zur Aufbereitung von Speisen und/oder Getränken, wie Getränkeautomaten, insbesondere Kaffeeautomaten, Trinkwasserspender, Koch- und Backgeräte, Dampf- und/oder Hochdruckreiniger, Luftreiniger und- konditionierer oder dergleichen mit einem Wassertank (66) und einer Filterpatrone (31), **dadurch gekennzeichnet, dass** der Wassertank und die Filterpatrone gemäß einem der Ansprüche 1 bis 8 ausgebildet sind.

10. Filterpatrone (31) zur Verwendung in einem Wassertank (66) mit Filterpatrone (31) nach einem der vorgenannten Ansprüche 1 bis 8, **dadurch gekennzeichnet, dass** die Filterpatrone eine Formdichtung (32) mit Sechskantquerschnitt aufweist, deren Innenfläche eine Dichtfläche(33) bildet.

## Claims

1. Water tank (66) with filter cartridge (31) for water-using apparatus, in particular household appliances, such as vending machines, especially coffee machines, drinking water dispensers, cooking and baking equipment, steam equipment, particularly steam irons, steam cleaners, pressure cleaners, air cleaners and conditioners or the like, wherein a suction port is provided on the tank for drawing water from the water tank with means for generating a negative pressure and a filter connection for connecting the filter cartridge in the interior of the water tank, **characterised in that** mechanical coding structures are provided at the filter connection of the water tank in order to prevent the use of this with non-compliant filter cartridges, wherein a tank-side connection socket (23) has a hexagonal outer contour, whose circumferential outer surface forms a sealing surface (24) and wherein the filter cartridge used (31) is provided with a moulded seal (32), which also has a hexagonal cross-section and wherein the inner surface thereof forms a sealing surface (33).

2. Water tank and filter cartridge according to claim 1, **characterised in that** the filter connection of the water tank and a connecting piece of the filter cartridge surround one another.

3. Water tank and filter cartridge according to one of the preceding claims, **characterised in that** a blending setting is provided for blending filtered fluid with unfiltered and/or otherwise filtered or processed liquid.

4. Water tank and filter cartridge according to any one of the preceding claims, **characterised in that** an angle-dependent blending setting is provided.

5. Water tank and filter cartridge according to claim 3, **characterised in that** the filter cartridge has at least one actuation element for actuating a tank-side blending quantity adjustment.

6. Water tank and filter cartridge according to any one of the claims 3 to 5, **characterised in that** a blending device is provided for the control of two or more filter sections.

7. Water tank and filter cartridge according to any one of the preceding claims, **characterised in that** an adapter (85) for connection of the filter cartridge (31) is provided at the tank-side filter connecting element (1) .

8. Water tank and filter cartridge according to any one of the preceding claims, **characterised in that** an adapter (86) is provided at the tank-side apparatus connection element (68) for connection to an apparatus.

9. Apparatus, in particular water-using household appliances or apparatus for the preparation of food and/or beverages, such as vending machines, especially coffee machines, drinking water dispensers, cooking and baking equipment, steam and/or high-pressure cleaners, air cleaners and-conditioners or the like, comprising a water tank (66) and a filter cartridge (31), **characterised in that** the water tank and the filter cartridge are formed according to any one of claims 1 to 8.

10. Filter cartridge (31) for use in a water tank (66) with a filter cartridge (31) according to one of the preceding claims 1 to 8, **characterised in that** the filter cartridge has a shaped seal (32) with a hexagonal cross-section, whose inner surface forms a sealing surface (33).

## Revendications

1. Réservoir d'eau (66) avec cartouche filtrante (31) pour des appareils conducteurs d'eau, plus particulièrement des appareils ménagers, comme des distributeurs automatiques de boissons, plus particulièrement des machines à café, des distributeurs d'eau potable, des appareils de cuisson, des appareils à vapeur, plus particulièrement des fers à repasser à vapeur, des nettoyeurs à vapeur, des nettoyeurs à haute pression, des épurateurs d'air et des climatiseurs ou autres, un raccord d'aspiration étant prévu au niveau du réservoir pour l'aspiration de l'eau hors du réservoir d'eau avec des moyens de production d'une dépression et un raccord de filtre pour le raccordement de la cartouche filtrante à l'intérieur du réservoir d'eau, **caractérisé en ce que** des structures de codage mécanique sont prévues au niveau du raccord de filtre du réservoir d'eau, afin d'exclure l'utilisation d'une cartouche filtrante non appropriée, un socle de raccordement (23) côté réservoir présentant un contour extérieur de forme hexagonale dont la surface extérieure périphérique forme une surface d'étanchéité (24) et la cartouche filtrante (31) utilisée étant munie d'un joint d'étanchéité moulé qui présente également une section transversale hexagonale et dont la surface intérieure forme une surface d'étanchéité (33).

2. Réservoir d'eau et cartouche filtrante selon la revendication 1, **caractérisé en ce que** le raccord de filtre du réservoir d'eau et un manchon de raccordement de la cartouche filtrante s'emboîtent l'un dans l'autre.

3. Réservoir d'eau et cartouche filtrante selon l'une des revendications précédentes, **caractérisé en ce qu'**un réglage de by-pass est prévu pour le mélange du liquide filtré avec un liquide non filtré et/ou filtré autre part ou un liquide traité autrement.

4. Réservoir d'eau et cartouche filtrante selon l'une des revendications précédentes, **caractérisé en ce qu'**un réglage de by-pass en fonction de l'angle est prévu.

5. Réservoir d'eau et cartouche filtrante selon la revendication 3, **caractérisé en ce que** la cartouche filtrante comprend au moins un élément d'entraînement pour l'actionnement d'un réglage de by-pass côté réservoir.

6. Réservoir d'eau et cartouche filtrante selon l'une des revendications 3 à 5, **caractérisé en ce qu'**un dispositif de by-pass conçu pour la commande de deux trajets de filtrage ou plus est prévu.

7. Réservoir d'eau et cartouche filtrante selon l'une des revendications précédentes, **caractérisé en ce que**, au niveau de l'élément de raccordement de filtre (1) côté réservoir, un adaptateur (85) est prévu pour le raccordement de la cartouche filtrante (31).

8. Réservoir d'eau et cartouche filtrante selon l'une des revendications précédentes, **caractérisé en ce que**, au niveau de l'élément de raccordement d'appareil (68) côté réservoir, un adaptateur (86) est prévu pour le raccordement à un appareil.

9. Appareil, plus particulièrement appareil ménager conducteur d'eau ou appareil de traitement de plats et/ou de boissons, comme des distributeurs automatiques de boissons, plus particulièrement des machines à café, des distributeurs d'eau potable, des appareils de cuisson, des nettoyeurs à vapeur et/ou à haute pression, des épurateurs d'air et des climatiseurs ou autres avec un réservoir d'eau (66) et une cartouche filtrante (31), **caractérisé en ce que** le réservoir d'eau et la cartouche filtrante sont conçus selon l'une des revendications 1 à 8.

10. Cartouche filtrante (31) pour l'utilisation dans un réservoir d'eau (66) avec une cartouche filtrante (31) selon l'une des revendications précédentes 1 à 8, **caractérisée en ce que** la cartouche filtrante comprend un joint d'étanchéité moulée (32) avec une section transversale hexagonale dont la surface intérieure forme une surface d'étanchéité (33).
